(19) Europäisches Patentamt / European Patent Office / Office européen des brevets

(11) **EP 4 020 469 B1**

(12) **EUROPEAN PATENT SPECIFICATION**

(45) Date of publication and mention
of the grant of the patent:
**31.07.2024 Bulletin 2024/31**

(21) Application number: **20924281.7**

(22) Date of filing: **10.11.2020**

(51) International Patent Classification (IPC):
**G10L 25/78** (2013.01)   **G10L 25/84** (2013.01)
**G10L 21/02** (2013.01)   **G10L 19/008** (2013.01)
**H04M 3/56** (2006.01)   **H04M 3/18** (2006.01)

(52) Cooperative Patent Classification (CPC):
**H04M 3/18; H04M 3/568; H04M 3/569;**
G10L 21/0208; G10L 25/78; G10L 2021/02082;
H04M 2203/5072

(86) International application number:
**PCT/CN2020/127660**

(87) International publication number:
**WO 2021/179651 (16.09.2021 Gazette 2021/37)**

(54) **CALL AUDIO MIXING PROCESSING METHOD AND STORAGE MEDIUM**

VERFAHREN ZUR VERARBEITUNG VON ANRUF-AUDIOMISCHUNGEN UND SPEICHERMEDIUM

PROCÉDÉ DE TRAITEMENT DE MÉLANGE AUDIO D'APPEL ET SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2020 CN 202010168875**

(43) Date of publication of application:
**29.06.2022 Bulletin 2022/26**

(73) Proprietor: **Tencent Technology (Shenzhen)
Company Limited
Shenzhen, Guangdong, 518057 (CN)**

(72) Inventor: **LIANG, Junbin
Shenzhen, Guangdong 518057 (CN)**

(74) Representative: **Eisenführ Speiser
Patentanwälte Rechtsanwälte PartGmbB
Postfach 10 60 78
28060 Bremen (DE)**

(56) References cited:
WO-A1-2011/098142   CN-A- 1 684 143
CN-A- 102 226 944   CN-A- 106 878 230
CN-A- 107 613 151   CN-A- 109 413 475
CN-A- 111 048 119   US-A1- 2018 041 639

- SIMON GRAF ET AL: "Features for voice activity
detection: a comparative analysis", EURASIP
JOURNAL ON ADVANCES IN SIGNAL
PROCESSING, vol. 15, no. 10, 11 November 2015
(2015-11-11), pages 257, XP055337776, DOI:
10.1186/s13634-015-0277-z

**Description**

This application claims priority to Chinese Patent Application No. 202010168875.8, titled "CALL AUDIO MIXING PROCESSING METHOD AND APPARATUS, STORAGE MEDIUM, AND COMPUTER DEVICE" filed on March 12, 2020.

FIELD

The present disclosure relates to the technical field of voice processing, and in particular to a call audio mixing processing method and apparatus, a computer-readable storage medium, and a computer device.

BACKGROUND

With the development of computer technologies, a voice processing technology emerges. The voice processing technology includes various processing manners such as voice generation, voice signal analysis, or voice recognition, and is also referred to as a digital voice signal processing technology. The development of the voice processing technology has brought much convenience to life and work of people. For example, users can make a voice call, such as a two-party or multi-party call via a telecommunication network or the Internet. During the voice call, each party performs voice access by a terminal. The terminals send call audios to a mixing module for mixing. The mixed audio is transmitted to the terminals and finally played by speakers and other devices.

In practice, during an actual call, a speaker often encounters a case that the speaker subjects to interference sounds from different participants and thus his speech is interrupted. The reason is that ambient noise of the different participants is different, resulting in an unsatisfactory voice mixing effect. In a conventional solution, improvement is made to a full mixing mode. By using a selective mixing manner, some sounds with low volume or high noise are not mixed, to reduce interference on the speaker. This method can achieve certain effects. However, as a route selection policy is generally inflexible, for example, route selection based on volume levels, some participants with relatively high sound recording and collecting volume (a high background noise may exist) are more likely to be selected, while some participants with relatively low sound recording and collecting volume may never be selected. In this case, other participants can never hear the voice of the participants with low sound recording and collecting volume, resulting in low call quality.

In US2018/041639A1, systems and methods are described for modifying one of far-end signal playback and capture of local audio on an audio device. Frames of both a far-end audio stream and a near-end audio stream may be analyzed using a measure of voice activity, the analyzing producing voice data associated with each frame. Based on the voice data, a conference state may be determined, and one of playback of the far-end audio stream and capture of local audio on an audio device may be modified based on the determined conference state. By associating the likely intent with a predefined state, the device may further cull or remove unwanted or unlikely content from the device input and output. This may have a substantial advantage in allowing for full duplex operation in the case of more meaningful and continuing voice activity, particularly in the case where there are many connected endpoints.

SUMMARY

According to embodiments of the present disclosure, a call audio mixing processing method and a computer-readable storage medium according to respective claims 1 and 12 are provided.

Preferred embodiments are defined by the dependent claims.

Details of one or more embodiments of the present disclosure are provided in the accompanying drawings and descriptions below. Other features, objectives, and advantages of the present disclosure become apparent from the specification, the drawings, and the claims.

BRIEF DESCRIPTION OF THE DRAWINGS

To describe the technical solutions in the embodiments of the present disclosure clearer, the accompanying drawings required for describing the embodiments are described briefly hereinafter. Apparently, the accompanying drawings in the following description show only some embodiments of the present disclosure, and a person skilled in the art may still derive other accompanying drawings according to the accompanying drawings without creative efforts.

FIG. 1 is a diagram showing an application environment of a call audio mixing processing method according to an embodiment.
FIG. 2 is a schematic flowchart of a call audio mixing processing method according to an embodiment.
FIG. 3 is a schematic flowchart of a call audio mixing processing method according to another embodiment.

FIG. 4 is a schematic flowchart of a process of performing voice analysis on call audios to determine voice activity corresponding to call member terminals according to an embodiment.

FIG. 5 is a schematic flowchart of a process of performing voice analysis on call audios to determine voice activity corresponding to call member terminals according to an embodiment.

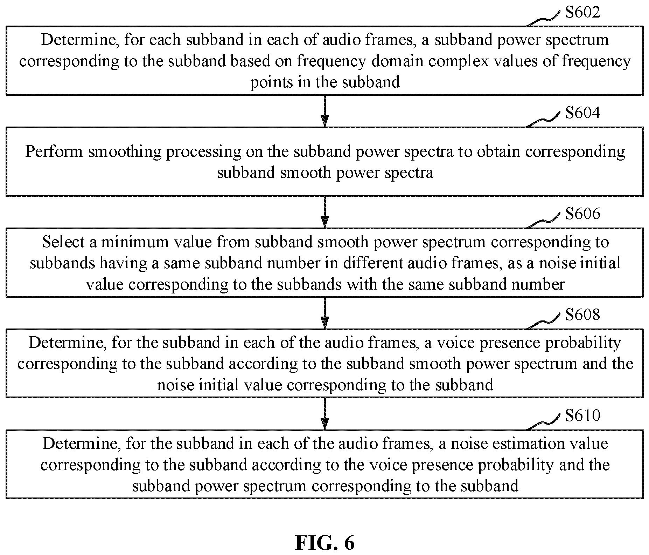

FIG. 6 is a schematic flowchart of a process of calculating, for subbands in each of audio frames, subband power spectra and noise estimation values corresponding to the subbands according to an embodiment.

FIG. 7 is a flowchart of a call audio mixing processing method according to another embodiment.

FIG. 8 is a sequence diagram of a call audio mixing processing method according to an embodiment.

FIG. 9(a) is a structural block diagram of a call audio mixing processing apparatus according to an embodiment.

FIG. 9(b) is a structural block diagram of a call audio mixing processing apparatus according to still another embodiment.

FIG. 10 is a structural block diagram of a call audio mixing processing apparatus according to another embodiment.

FIG. 11 is a structural block diagram of a server according to an embodiment.

FIG. 12 is a structural block diagram of a terminal according to an embodiment.

DETAILED DESCRIPTION OF EMBODIMENTS

To make the objectives, technical solutions, and advantages of the present disclosure clearer, the present disclosure is described in detail with reference to the accompanying drawings and the embodiments hereinafter. It is to be understood that the specific embodiments described herein are merely used to explain the present disclosure and are not intended to limit the present disclosure.

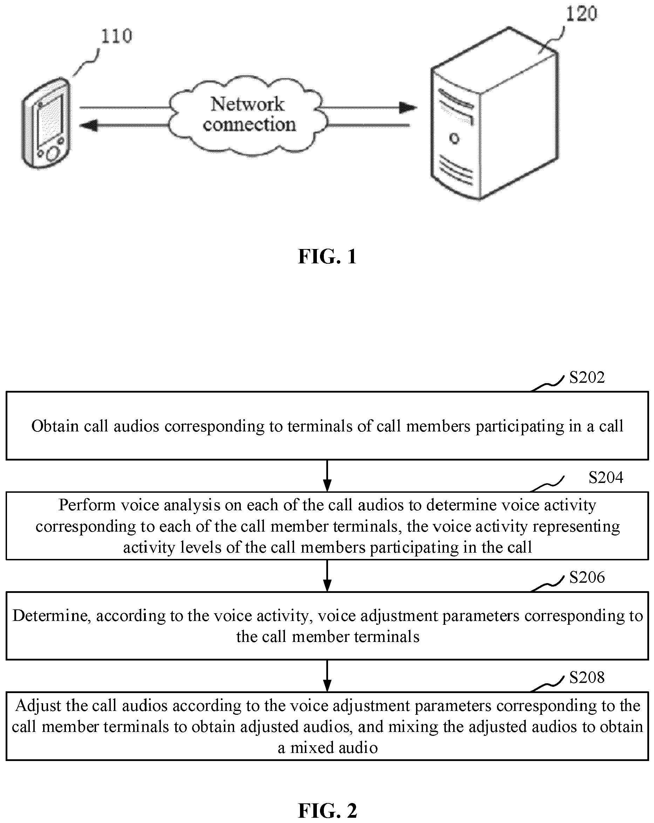

FIG. 1 is a diagram showing an application environment of a call audio processing method according to an embodiment. Referring to FIG. 1, the call audio processing method is applied to a call audio processing system. The call audio processing system includes a terminal 110 and a server 120. The terminal 110 and the server 120 are connected to each other over a network. The terminal 110 may be a telephone, a desktop terminal, or a mobile terminal, and the mobile terminal may be at least one of a mobile phone, a tablet computer, a notebook computer, and the like. The server 120 may be implemented as an independent server or a server cluster consisting of multiple servers. It may be understood that, the terminal 110 in this embodiment of the present disclosure may be a terminal corresponding to a call member participating in a call, which may also be referred to as a call member terminal. The terminal 110 may include a first terminal 112 and a second terminal 114. The first terminal may be understood as a terminal initiating a call, and the second terminal may be understood as a terminal receiving the call. The first terminal 112 and the second terminal 114 each establish a voice call link with the server 120 over a network to conduct a call. The call may be classified as a two-party call or a multi-party call based on the quantity of participants.

It may be understood that, different users participate in the call via different terminals 110. The terminals 110 upload acquired call audios to the server 120. The server 120 performs voice analysis on the call audios corresponding to the call members participating in the call, determines voice activity corresponding to the call members, and determines voice adjustment parameters corresponding to the call member terminals according to the voice activity. The server 120 adjusts the corresponding call audios according to the respective voice adjustment parameters to obtain adjusted audios, and mixes the adjusted audios to obtain a mixed audio. The server 120 may feed back the mixed audio to the terminals 110 corresponding to the call members participating in the call. The terminals 110 may play the mixed audio via speakers after receiving the mixed audio.

As shown in FIG. 2, in some embodiments, a call audio processing method is provided. In the embodiments, the method is applied to the server 120 in FIG. 1. Referring to FIG. 2, the call audio processing method includes the following steps S202 to S208.

In step S202, call audios corresponding to terminals of call members participating in a call are obtained.

A call refers to voice interaction between at least two user identities. A call may be classified as a two-party or a multi-party call depending on the quantity of participating user identities. A call involving only two user identities is a two-party call, and a call involving more than two user identities is a multi-party call. The call may be a group voice call or a group video call. A user identity is used for uniquely identifying a user member, which may be a character string including characters of at least one of the following types: number, letter, and symbol. Specifically, the user identity may be a user account, a user cell phone number, or the like. A call member is a user member participating in the call, which may also be referred to as a participant. A call member terminal is a terminal corresponding to the call member participating in the call. A call audio is user voice data acquired through the call member terminal when the call member participates in the call.

A call application may be run on the call member terminal, and the call member terminal can realize the function of mutual voice calls between different users through the call application. The call member terminal may acquire, through a sound device (for example, a microphone), voice data generated by a user during the call, generate a call audio accordingly, and transmit the call audio to the server. The server receives call audios transmitted by the terminals of the call members participating in the call. The call application may be an instant communication client, such as a WeChat client or a QQ client.

In some embodiments, the call member terminals include a first terminal and a second terminal. Call applications are run on the first terminal and the second terminal. The first terminal logs in to the server with a first user identity through the call application, and the second terminal logs in to the server with a second user identity through the call application. The first terminal may initiate a call request through the call application, and the second terminal receives the call request. The user of the second terminal may choose to participate or reject. When the user chooses to participate, the first terminal receives a connection response transmitted by the second terminal in response to the call request and establishes a voice call link. In this way, a call is implemented between the first terminal and the second terminal.

It may be understood that, the first terminal and the second terminal may implement a call through an operator network or an Internet network. The operator network is, for example, a Telecom network, a Mobile network, or a Unicom network. When the terminal is a telephone, the first terminal and the second terminal may implement a call based on the operator network. The first terminal and the second terminal may also implement a call through the Internet network by means of an installed call application, and in this case, the call may be referred to as a voice over Internet Protocol (VoIP) call.

In step S204, voice analysis is performed on each of the call audios to determine voice activity corresponding to each of the call member terminals. The voice activity represents activity levels of the call members participating in the call.

Voice activity reflects the activity level of a call member participating in a call. Higher voice activity indicates a higher possibility that the call member actually makes a voice, and lower voice activity indicates a lower possibility that the call member actually makes a voice.

After receiving call audios corresponding to the terminals of the call members participating in the call, the server may perform digital voice analysis on the call audios to determine voice activity corresponding to the call audios. It may be understood that, the call audios acquired and uploaded by the call member terminals generally include noise (which may be ambient noise). The server may identify noise and voices (the voices referring to sound generated when the call members speak) from the call audios, and then determine corresponding voice activity by comparing the voices with noise.

In some embodiments, the server may first calculate signal-to-noise ratios in the call audios when performing voice analysis on the call audios. The signal-to-noise ratio is a signal strength ratio of voice of the call member and the noise in the call audio, which may be indicated by a logarithm of a ratio of voice signal power to noise power. A higher signal-to-noise ratio represents a higher voice component, which indicates high voice activity, and a higher volume gain needs to be assigned. Accordingly, a low signal-to-noise ratio represents a relatively low probability that a current call audio is a voice of a call member, and a relatively low volume gain is assigned. It may be understood that, the value of the volume gain herein may be a value less than one, a value greater than one, or a value equal to one.

In some embodiments, the server may directly use the signal-to-noise ratios of the call audios as the corresponding voice activity, or use values obtained by performing linear or non-linear transformation on the signal-to-noise ratios as the corresponding voice activity. For example, the server may use a preset multiple of the signal-to-noise ratio as the voice activity, or use a logarithm value of the signal-to-noise ratio as the voice activity, or use a value obtained by performing various mathematical operations on the signal-to-noise ratio as the voice activity. Implementation of the voice activity is not limited in the embodiments of the present disclosure, as long as the signal-to-noise ratio is positively correlated with the voice activity.

In step S206, according to the voice activity, voice adjustment parameters corresponding to the call member terminals are determined.

A voice adjustment parameter is a parameter used for performing voice gain or attenuation on a call audio. The voice adjustment parameter may be a value less than 1, equal to 1, or greater than 1. The server may determine corresponding voice adjustment parameters according to the voice activity of the call audios. Higher voice activity represents a higher voice component in a call audio, and a higher volume gain needs to be assigned. That is, a relatively large voice adjustment parameter is set, so that the call audio can obtain a relatively high gain during mixing processing. On the contrary, lower voice activity represents a relatively low possibility that a user makes a voice in the call audio, and a relatively low volume gain is assigned. That is, a relatively small voice adjustment parameter is set, so that the call audio can obtain a relatively low gain or the audio is attenuated during mixing processing.

In some embodiments, the server may set an adjustment threshold, that is, when a voice adjustment parameter determined based on voice activity in a certain call audio is less than the adjustment threshold, the voice adjustment parameter of the call audio is set to be equal to the adjustment threshold. That is, lower voice activity indicates a smaller voice adjustment parameter. The corresponding voice adjustment parameter decreases with decreasing of the voice activity until the preset adjustment threshold is reached.

In some embodiments, the server may detect and analyze voices of the call audios. If it is detected that there is no human voice or a probability of human voice is low, the corresponding voice activity is relatively low, and therefore a relatively lower volume gain value is assigned. If it is detected that a call audio contains a clear human voice or a relatively high probability of human voice, the corresponding voice activity is high and therefore a relatively high volume gain value is assigned. The volume gain value herein is the voice adjustment parameter.

In step S208, the corresponding call audios are adjusted according to the voice adjustment parameters corresponding to the call member terminals to obtain adjusted audios, and the adjusted audios are mixed to obtain a mixed audio.

The server may adjust, according to the respective voice adjustment parameters, the corresponding call audios to obtain adjusted audios. Further, the server may perform digital signal superimposing processing on the adjusted audios of the call audios to obtain the mixed audio.

In some embodiments, the server may determine the user identities of the call members participating in the call and feed back the mixed audio to the call member terminals indicated by the user identities. The corresponding call member terminals may receive the mixed audio and play the mixed audio by using devices such as speakers. In this way, the call members may participate in the call by speaking, receiving the mixed audio, and playing the mixed audio.

In some embodiments, after receiving the mixed audio, the call member terminals perform voice enhancement processing on the mixed audio to make the played mixed audio clearer.

In the foregoing call audio processing method, voice analysis is performed on the call audios corresponding to the terminals of the call members participating in the call to determine the voice activity corresponding to the call member terminals. The voice adjustment parameters of the call member terminals are controlled according to the voice activity, so that the call audios are adjusted according to the corresponding voice adjustment parameters to obtain the adjusted audios, and the adjusted audios are mixed to obtain the mixed audio. In this way, with a voice-activity-based voice modulation mechanism, the interference to an active user from ambient noise of an inactive user during the call can be reduced, so that a call member with low voice activity generates little interference on a call member with high voice activity, and the overall call effect and quality are improved. Moreover, the number of participants is not limited during the mixing processing, to avoid the problem that the call member cannot "produce a voice" once the number of participants exceeds a predetermined value, thereby further improving the call quality effectively.

In some embodiments, voice data is encoded and then is transmitted between the call member terminals and the server, to improve the transmission efficiency and security of the voice data.

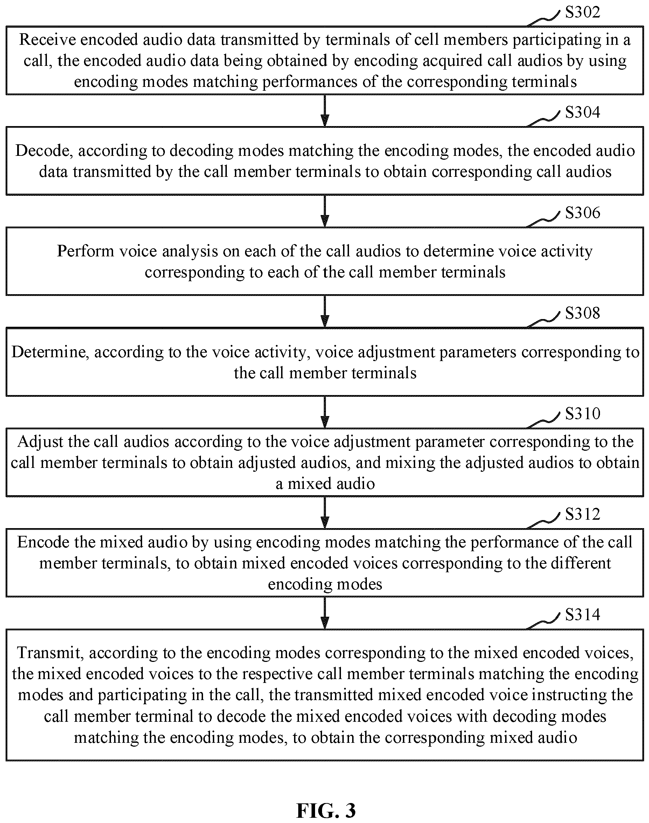

Referring to FIG. 3, in some embodiments, the call audio processing method includes the following steps S302 to S314.

In step S302, encoded audio data transmitted by terminals of call members participating in a call is received. The encoded audio data is obtained by encoding acquired call audios by using an encoding mode matching performance of the corresponding terminals.

The call member terminals may acquire audio data generated by the call members during the call, and encode the acquired call audios by using the encoding mode matching the performance of the call member terminals to obtain the encoded audio data. The terminal performance is the software capability and hardware capability of a terminal, and determines the maximum processing capability of the terminal. The software capability of the terminal is the capability of specific software or algorithms supported by the terminal, and the hardware capability of the terminal may specifically be the capability related to the central processing unit (CPU) and memory of the terminal. The encoding mode matching the terminal performance may specifically be an encoding mode corresponding to an encoding format supported by the terminal or an encoding mode corresponding to a code stream format supported by the terminal.

In some embodiments, the call member terminal and the server may pre-determine an encoding mode and a decoding mode that match with each other, and the encoding mode matches the terminal performance. Further, the call member terminal may encode the call audio according to the preset encoding mode to obtain the encoded audio data.

In some embodiments, the encoding mode adopted by the terminal may be pulse code modulation (PCM) coding, parametric coding, hybrid coding, or the like, which is not limited in the embodiments of the present disclosure.

In step S304, according to respective decoding modes matching the encoding modes, the encoded audio data transmitted by the corresponding call member terminals is decoded to obtain corresponding call audios.

When receiving the encoded audio data transmitted by the call member terminals, the server may decode the encoded audio data by using corresponding decoding modes to obtain corresponding call audios.

In some embodiments, when the call member terminals encode the call audios by adopting the pre-determined encoding mode, correspondingly, the server may perform decoding by adopting the corresponding decoding modes. When the call member terminals perform encoding by adopting the encoding mode matching the performance thereof, the call member terminals may send encoding mode identifiers to the server. The server determines the corresponding decoding mode based on the encoding mode identifiers, so as to decode the encoded audio data to obtain the call audios. In this way, the call audios are transmitted by encoding and decoding, thereby greatly improving the transmission efficiency and security of the call audios.

In step S306, voice analysis is performed on each of the call audios to determine voice activity corresponding to each of the call member terminals.

In step S308, according to the voice activity, voice adjustment parameters corresponding to the call member terminals are determined.

In step S310, the corresponding call audios are adjusted according to the voice adjustment parameters to obtain adjusted audios, and the adjusted audios are mixed to obtain a mixed audio.

In step S312, the mixed audio is encoded by using encoding modes matching the terminal performances of the call member terminals, to obtain mixed encoded voices corresponding to the different encoding modes.

After mixing the call audios corresponding to the different terminals to obtain the mixed audio, the server may encode the mixed audio by using encoding modes matching the terminal performances of the call member terminals, to obtain mixed encoded voices corresponding to the different encoding modes.

In step S314, according to the encoding modes corresponding to the mixed encoded voices, the mixed encoded voices are transmitted to the call member terminals matching the corresponding encoding mode and participating in the call. The transmitted mixed encoded voices instruct the call member terminals to decode the mixed encoded voices with decoding modes corresponding to the encoding modes, to obtain the corresponding mixed audio.

The server may transmit, according to the encoding modes corresponding to the mixed encoded voices, the mixed encoded voices to the call member terminals matching corresponding encoding modes and participating in the call. Further, the call member terminals may decode the mixed encoded voices with decoding modes corresponding to the encoding modes, to obtain the corresponding mixed audio.

It may be understood that, for a call member terminal, the server may encode the mixed audio by using the encoding mode adopted by the call member terminal, to obtain a mixed encoded voice, and feed back the mixed encoded voice to the call member terminal. Definitely, the server may encode the mixed audio by using another encoding mode, but the resulting mixed encoded voice can be decoded only by the corresponding call member terminal. The encoding mode is not limited in the embodiments of the present disclosure.

In the foregoing embodiment, during the transmission of the call audios and mixed audio, the call member terminals and the server encode voice data to be transmitted separately before transmission, thereby greatly improving the efficiency and security of voice data transmission.

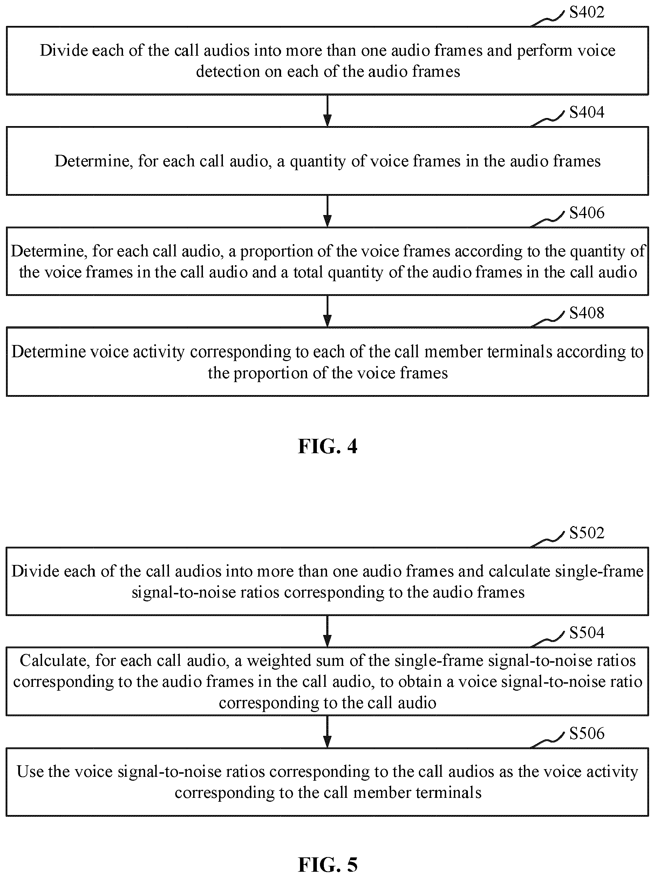

Referring to FIG. 4, in some embodiments, step S204, that is, the operation of performing voice analysis on each of the call audios to determine voice activity corresponding to each of the call member terminals includes the following steps S402 to S408.

In step S402, each of the call audios is divided into more than one audio frames and voice detection is detected on each of the audio frames.

An audio frame is the smallest processing unit of a call audio, and is a call audio per unit time. Specifically, for each call audio, the server may divide, according to an acquisition time sequence of the call audios, the call audio into more than one audio frames, and perform voice detection on each audio frame.

In some embodiments, in order to cause the transition between adjacent audio frames smooth and maintain continuity, the server may divide each call audio into audio frames by using an overlapping segmentation manner. In this case, an overlapping part between two adjacent frames may be referred to as a frame shift, and a ratio of the frame shift to a frame length generally ranges from 0 to 0.5. Definitely, the server may also directly divide each call audio into more than one audio frames based on a fixed duration. The division manner is not limited in the embodiments of the present disclosure.

In some embodiments, the server may process each audio frame by using a voice activity detection (VAD) algorithm to determine whether the audio frame is a voice or non-voice frame, that is, determining whether a human voice is present in the audio frame.

In step S404, for each call audio, a quantity of voice frames in the audio frames is determined.

For each call audio, the server may count a quantity of voice frames with a human voice in the call audio, that is, the quantity of voice frames in the call audio.

In step S406, for each call audio, a proportion of the voice frames is determined according to the quantity of the voice frames in the call audio and a total quantity of the audio frames in the call audio.

For each call audio, the server may divide the quantity of the voice frames in the call audio by the total quantity of the audio frames in the call audio, to obtain the proportion of the voice frames in the call audio.

In step S408, voice activity corresponding to each of the call member terminals is determined according to the proportion of the voice frames.

For each call audio, the server may directly use the proportion of the voice frames corresponding to the call audio as the corresponding voice activity. Alternatively, the server may perform certain mathematical operations on the proportion of the voice frames to obtain the corresponding voice activity, which is positively correlated with the proportion of the voice frames. That is, a higher proportion of voice frames in a call audio indicates higher voice activity corresponding to the call audio, and a lower proportion of voice frames in a call audio indicates lower voice activity corresponding to the call audio. It may be understood that, a larger quantity of voice frames indicates that a corresponding call member is making a voice effectively, that is, the call member is active in the call.

In the foregoing embodiment, voice detection is performed on audio frames within a certain period to identify whether the audio frames are voice frames. Further, voice activity corresponding to the call audios are accurately and quickly determined according to the proportions of the voice frames, thereby quantifying the voice activity of the call members.

In some embodiments, step S204, that is, the process of performing voice analysis on each of the call audios to determine voice activity corresponding to each of the call member terminals includes: dividing each of the call audios into more than one audio frames and performing voice detection on each of the audio frames; determining voice frames in the audio frames and determining energy values corresponding to the voice frames; and determining the voice activity corresponding to each of the call member terminals according to a quantity of valid voice frames with energy values greater than or equal to an energy threshold in the voice frames in the call audio.

The server may divide, according to an acquisition sequence of the call audios, each of the call audios into more than one audio frames, and perform voice detection on each of the audio frames. If a human voice is detected in an audio frame, the audio frame is a voice frame. For each call audio, the server may determine voice frames in the call audio and determine energy values corresponding to the voice frames. The server may count a quantity of valid voice frames with energy values greater than or equal to an energy threshold in the voice frames in the call audio, and determine the voice activity corresponding to each of the call member terminals according to the quantity of valid voice frames. The energy value corresponding to each of the voice frames may be a power value of the voice frame, and the energy value corresponding to the voice frame may be a sum of subband power spectra of subbands included in the voice frame. For the specific calculation of the subband power spectra, one may refer to the descriptions of the embodiments below. The energy threshold is a threshold determined based on an actual situation, and is used for determining whether a voice frame is a valid voice frame.

It may be understood that, for an audio frame, even if a human voice is detected in the audio frame and the audio frame is determined as a voice frame, it is possible that the human voice present in the audio frame is a background voice, that is, noise rather than a real speech. Therefore, voice frames with energy values greater than the energy threshold function as valid voice frames, so that noise is effectively filtered out, thereby obtaining more accurate voice activity determined based on the valid voice frames.

In some embodiments, when determining the voice activity corresponding to each of the call audios, the server may count a quantity of the valid voice frames in the call audio. The calculation is then performed on the quantity based on a preset function to obtain the corresponding voice activity. The voice activity is positively correlated with the quantity of the valid voice frames, that is, a larger quantity of valid voice frames indicates higher voice activity, and a smaller quantity of valid voice frames indicates lower voice activity. The preset function is, for example, a multiplication function, a power function or a combined function of multiple operations.

In the foregoing embodiment, the voice frames in the audio frames are detected, and the voice frames with energy values greater than the energy threshold function as the valid voice frames, so that noise can be effectively filtered out from the audio frames, thereby obtaining more accurate voice activity determined based on the valid voice frames.

In some embodiments, step S204, that is, the process of performing voice analysis on each of the call audios to determine voice activity corresponding to each of the call member terminals includes the following steps S502 to S506.

In step S502, each of the call audios is divided into more than one audio frames and single-frame signal-to-noise ratios corresponding to the audio frames are calculated.

For each call audio, the server may divide, according to an acquisition sequence of the call audios, the call audio into more than one audio frames, and calculate single-frame signal-to-noise ratios corresponding to the audio frames. A single-frame signal-to-noise ratio is a signal-to-noise ratio corresponding to a single audio frame.

In some embodiments, when calculating the single-frame signal-to-noise ratio corresponding to each audio frame, the server may first convert the audio frame from time domain space to frequency domain space through a fast Fourier transform to obtain a corresponding spectrum diagram, which is also referred to as a voice spectrum. Further, the server may calculate a power spectrum of the audio frame according to amplitudes corresponding to frequency points in the voice spectrum. The server may obtain a minimum power value in the frequency spectrum corresponding to the audio frame by using a minimal tracking method, and use the minimum power value as an estimation value of noise included in the audio frame. Further, the single-frame signal-to-noise ratio of the audio frame is calculated according to a ratio of the power spectrum to the estimation value of the noise.

In step S504, for each call audio, a weighted sum of the single-frame signal-to-noise ratios corresponding to the audio frames in the call audio is calcualted, to obtain a voice signal-to-noise ratio corresponding to the call audio.

For each call audio, the server may calculate a weighted sum of the single-frame signal-to-noise ratios corresponding to the audio frames in the call audio, to obtain a voice signal-to-noise ratio corresponding to the call audio. The voice signal-to-noise ratio is a signal-to-noise ratio corresponding to the call audio. Weight coefficients may be set according to actual situations. For example, the weight coefficients of first few frames are relatively large and the weight coefficients of last few frames are relatively small. In an embodiment, the same weight coefficient is set for all frames. Setting of the weight coefficient is not limited in the embodiments of the present disclosure.

In step S506, voice signal-to-noise ratios corresponding to the call audios are used as the voice activity corresponding to the call member terminals.

The server may directly use the voice signal-to-noise ratios corresponding to the call audios as the voice activity corresponding to the call member terminals.

In some embodiments, the server may perform linear or non-linear transformation on the voice signal-to-noise ratios to obtain the corresponding voice activity. The voice activity is positively correlated with the voice signal-to-noise ratios. That is, a higher voice signal-to-noise ratio indicates a higher probability of the presence of a voice, and thus indicates higher voice activity.

In the foregoing embodiment, each call audio is divided into more than one audio frames, and the voice signal-to-noise ratio of the call audio is determined according to the single-frame signal-to-noise ratios corresponding to the audio frames. In this way, the voice signal-to-noise ratios function as the corresponding voice activity, and the voice signal-to-noise ratios can accurately reflect the voice activity corresponding to the call members.

In some embodiments, step S204, that is, the process of performing voice analysis on each of the call audios to determine voice activity corresponding to each of the call member terminals includes: dividing each of the call audios into more than one audio frames and calculating single-frame signal-to-noise ratios corresponding to the audio frames. Step S206, that is, the process of determining, according to the voice activity, voice adjustment parameters corresponding to the call member terminals includes: determining, for each call audio, voice adjustment parameters corresponding to the audio frames based on the single-frame signal-to-noise ratios corresponding to the audio frames included in the call audio. The process of adjusting the corresponding call audios according to the voice adjustment parameters corresponding to the call member terminals to obtain adjusted audios includes: adjusting, for each call audio, the audio frames according to the voice adjustment parameters corresponding to the audio frames in the call audio, to obtain the adjusted audio corresponding to the call member terminal; and mixing the adjusted audios corresponding to the call members to obtain a mixed audio.

That is, the call audio processing method includes the following steps: obtaining call audios corresponding to terminals of call members participating in a call; dividing each of the call audios into more than one audio frames and calculating single-frame signal-to-noise ratios corresponding to the audio frames; determining, for each call audio, voice adjustment parameters corresponding to the audio frames based on the single-frame signal-to-noise ratios corresponding to the audio frames in the call audio; adjusting, for the each call audio, the audio frames according to the voice adjustment parameters corresponding to the audio frames in the call audio, to obtain an adjusted audio corresponding to the call member terminal; mixing the adjusted audios corresponding to the call member terminals to obtain a mixed audio; and feeding back the mixed audio to the call members participating in the call.

The server may divide each of the call audios into more than one audio frames and calculate single-frame signal-to-noise ratios corresponding to the audio frames. Further, for each call audio, the server determines voice adjustment parameters corresponding to the audio frames based on the single-frame signal-to-noise ratios corresponding to the audio frames in the call audio. That is, the voice adjustment parameters of the call audios are determined with an audio frame as a unit. For example, the call audio includes five audio frames. In this case, respective single-frame signal-to-noise ratios of the five audio frames determine respective voice adjustment parameters of the five frames.

Further, for each call audio, the server performs voice adjustment on the voice frames according to the voice adjustment parameters corresponding to the audio frames in the call audio, to obtain an adjusted audio corresponding to the call member. That is, for a call audio, the server may perform adaptive adjustment to audio frames in the call audio. For example, gain processing is performed on a signal of an audio frame with a high single-frame signal-to-noise ratio and a signal of an audio frame with a low single-frame signal-to-noise ratio is attenuated, so as to adjust the call audio by using each frame as a unit, to obtain an adjusted audio. Further, the server may perform digital signal superimposing processing on the adjusted audios corresponding to the call members to obtain the mixed audio.

In the foregoing embodiment, each call audio is divided into audio frames, and voice adjustment parameters corresponding to the frames are determined, so that voice adjustment is separately performed on the audio frames to obtain a corresponding adjusted audio. Further, the adjusted audios are mixed to obtain a mixed audio. The call audios are adjusted in a finer and more precise manner, so that the mixed audio has higher quality.

In some embodiments, step S206, that is, the process of determining, according to the voice activity, voice adjustment parameters corresponding to the call member terminals includes: determining a maximum voice activity value among the voice activity corresponding to the call member terminals; and determining, according to comparison values between the voice activity corresponding to the call member terminals and the maximum voice activity value, the voice adjustment parameters corresponding to the call member terminals. The voice adjustment parameters corresponding to the call member terminals are negatively correlated with corresponding comparison values.

The server may select the maximum voice activity value from the voice activity corresponding to the call member terminals. Further, the server may determine, according to comparison values between the voice activity corresponding to the call member terminals and the maximum voice activity value, the voice adjustment parameters corresponding to the call member terminals. The voice adjustment parameters corresponding to the call member terminals are negatively correlated with corresponding comparison values. That is, a larger comparison value indicates a smaller voice adjustment parameter, and a smaller comparison value indicates a larger voice adjustment parameter. A comparison value is a difference between two values, which may be determined through a mathematical calculation. The mathematical calculation includes, for example, direct division of two numbers, division following logarithmic operation, subtraction, or division following logarithmic operation after another operation. The comparison value may estimate a difference state of one numerical value relative to another numerical value.

In some embodiments, the server may calculate the comparison value between the voice activity corresponding to the call member terminal and the maximum voice activity value, and then perform calculation on the comparison value based on a preset function to obtain the corresponding voice adjustment parameter. The voice adjustment parameter is negatively correlated with the comparison value. That is, a greater difference between voice activity corresponding to a call audio and the maximum voice activity value indicates a smaller voice adjustment parameter; and a smaller difference between the voice activity corresponding to a call audio and the maximum voice activity value indicates a larger voice adjustment parameter. It may be understood that, a largest voice adjustment parameter is set for a call audio with highest voice activity. The preset function is, for example, a subtraction function, a division function or a combined function of multiple operations, or the like.

In the foregoing embodiment, for the call audios corresponding to the terminals of the call members participating in the call, a relatively large voice adjustment parameter is set for a call audio with relatively high voice activity. In this way, the interference of noise on the call members can be reduced, thereby improving the effect of voice mixing.

In some embodiments, the process of dividing each of the call audios into more than one audio frames and calculating single-frame signal-to-noise ratios corresponding to the audio frames includes: for the call audio corresponding to each call member terminal, dividing the corresponding call audio into more than one audio frames located in time domain space; converting audio frames from the time domain space to a frequency domain space to obtain corresponding voice spectra, and determining more than one subbands in each of the voice spectra corresponding to the audio frames; calculating, for the subbands in each of the audio frames, subband power spectra and noise estimation values corresponding to the subbands, and determining subband signal-to-noise ratios corresponding to the subbands based on the subband power spectra and the noise estimation values; and calculating the single-frame signal-to-noise ratio corresponding to each of the audio frames according to the respective subband signal-to-noise ratios corresponding to the subbands in the audio frame.

The server may convert the audio frames from the time domain space to the frequency domain space through a fast Fourier transform to obtain a corresponding spectrum diagram, which is also referred to as the voice spectra. Further, the server may divide each of the voice spectra into more than one subbands according to a preset fixed frequency band. The subband is also referred to as a sub-frequency band.

Further, the server calculates, for the subbands in each of the audio frames, subband power spectra and noise estimation values corresponding to the subbands, and determines subband signal-to-noise ratios corresponding to the subbands based on the subband power spectra and the noise estimation values. Further, for each audio frame, the server may calculate an average value of the subband signal-to-noise ratios corresponding to the subbands in the audio frame to obtain the single-frame signal-to-noise ratio corresponding to the audio frame. The specific calculation of the subband power spectra and noise estimation values corresponding to the subbands is described in detail in the embodiments below.

In some embodiments, the server may calculate the single-frame signal-to-noise ratios corresponding to the

$$SNR(i,k) = \frac{S(i,k)}{\hat{S}_n(i,k)}$$

audio frames by using the following formula: , where $S(i,k)$ represents a subband power spectrum of a k-th subband in an i-th audio frame, and $\hat{S}_n(i,k)$ represents a noise estimation value of the k-th subband in the i-th audio frame. The single-frame signal-to-noise ratio of the i-th audio frame may be calculated by using the following

$$\text{Snr\_frame(i)} = \frac{1}{N} \sum_{k=1}^{N} SNR(i,k)$$

formula: , that is, an average value of the signal-to-noise ratios of all the subbands is calculated as the single-frame signal-to-noise ratio of the current frame.

In the foregoing embodiment, the audio frames are converted from time domain space to a frequency domain space for processing, so that the subband signal-to-noise ratios corresponding to the subbands in the audio frames can be determined more conveniently and accurately, thereby determining the single-frame signal-to-noise ratios based on the subband signal-to-noise ratios.

In some embodiments, the step of calculating, for the subbands in each of the audio frames, subband power spectra and noise estimation values corresponding to the subbands includes the following steps S602 to S610,

In step S602, for each subband in each of the audio frames, the subband power spectrum corresponding to the subband is determined based on frequency domain complex values of frequency points in the subband.

For each subband in each of the audio frames, the server may determine frequency domain complex values of amplitudes of frequency points in the subband according to the voice spectrum, and calculate an average of the frequency domain complex values of all the frequency points in the subband to obtain the subband power spectrum corresponding to the subband.

In some embodiments, the subband power spectrum of the subband may be calculated by using the following formula:

$$S(i,k) = \frac{1}{(freq_2(k) - freq_1(k) + 1)} \sum_{z=freq_1(k)}^{freq_2(k)} |X(i,z)|^2$$

, where k = 1,2,3, ..., N ; i represents a frame number, z represents a frequency point number, which is also referred to as a frequency point index, and k represents a subband number. $S(i,k)$ represents a subband power spectrum of a k-th subband in an i-th audio frame. X(i, z) represents a frequency domain complex value of a z-th frequency point of the i-th frame subjecting to a Fourier transform; $freq_1(k)$ indicates a start frequency point index of the k-th subband, and $freq_2(k)$ indicates an ending frequency point index of the k-th subband.

In step S604, smoothing processing is performed on the subband power spectra to obtain subband smooth power spectra.

For each subband in an audio frame, the server performs frequency domain smoothing processing on adjacent subbands and time domain smoothing processing on historical frames for the subband power spectrum of the subband, to obtain a corresponding subband smooth power spectrum.

In some embodiments, the process of performing smoothing processing on the subband power spectra to obtain corresponding subband smooth power spectra includes: determining, for a current subband in a current frame being processed in the audio frames, a preset quantity of adjacent subbands adjacent to the current subband in the current frame; combining the adjacent subbands and the current subband to form a subband sequence; calculating a weighted sum, according to weights corresponding to the subband sequence, of the subband power spectra of the subbands in the subband sequence to obtain a frequency domain smooth power spectrum corresponding to the current subband in the current frame; and calculating a weighted sum of a frequency domain smooth power spectrum of a historical subband having a same subband number with the current subband in a frame previous to the current frame and the frequency domain smooth power spectrum of the current subband in the current frame, to obtain a subband smooth power spectrum corresponding to the current subband in the current frame.

The server may first perform frequency domain smoothing processing on the subband power spectrum. Specifically, the server determines a preset quantity of adjacent subbands adjacent to the current subband in the current frame. The adjacent subbands may be historical frames previous to the current frame, and/or, subsequent frames after the current frame, for example, the previous two frames and the subsequent two frames of the current frame. Further, the server combines the adjacent subbands and the current subband to form a subband sequence. According to weights corresponding to the subband sequence, a weighted sum of subband power spectra of the subbands in the subband sequence is calculated to obtain a frequency domain smooth power spectrum corresponding to the current subband in the current frame.

In some embodiments, the server may calculate the frequency domain smooth power spectrum of the current subband by using the following formula:

$$\overline{S}_f(i,k) = \frac{1}{2w+1} \sum_{j=-w}^{w} b(j+w)S(i,k+j)$$

, where $\overline{S}_f(i,k)$ represents a frequency domain smooth power spectrum of an i-th subband in an i-th audio frame; 2w + 1 represents a quantity of subbands in the subband sequence, and b(j + w) represents a set of frequency domain smoothing weight factors. For example, when w = 2, b(j + w) is [0.1, 0.2, 0.4, 0.2, 0.1].

Further, the server may perform time domain smoothing processing on the current subband in the current frame based on a frequency domain smooth power spectrum of a historical subband with a same subband number as the current subband in a historical frame. It may be understood that, the historical frame may be one historical frame or more than one historical frames. When the quantity of historical frames is 1, the historical frame may be a previous voice frame or an N-th voice frame previous to the current frame, where N is a positive integer greater than 1.

In some embodiments, the server may calculate the subband smoothing power spectrum of the current subband by using the following formula: $\overline{S}(i,k) = c_0\overline{S}(i-1, k) + (1-c_0)\overline{S}_f(i, k)$ ; where, $c_0$ represents a time domain smoothing factor, for example, $c_0 = 0.9$.

It may be understood that, after processing the current subband of the current frame, the server continues processing a next subband until the subband smooth power spectra corresponding to all the subbands in the current frame are calculated. Further, a next voice frame is processed until the subband smooth power spectra corresponding to the subbands in each of the voice frames in the call audio are calculated. The server may process different call audios at the same time or one by one. The processing is repeated until subband smooth power spectra corresponding to the subbands in each of the audio frames in each of the call audios are calculated.

In step S606, a minimum value is selected from subband smooth power spectra corresponding to subbands with a same subband number in different audio frames, as a noise initial value corresponding to the subbands with the same subband number.

The server may select a minim value from subband smooth power spectra corresponding to subbands with a same subband number in different audio frames, as a noise initial value corresponding to the subbands with the same subband number.

In some embodiments, the server may set a comparison period. For audio frames included in a comparison period, the server may select a minimum value from subband smooth power spectra corresponding to subbands with a same subband number, as a noise initial value corresponding to the subbands with the same subband number. Further, screening is performed in a next period and a minimum value for different periods is selected as a final noise initial value corresponding to the subband.

In some embodiments, a computer device may determine the noise initial value by using the following algorithm:

$$
\begin{aligned}
&if\,(\mathrm{mod}(i,T)==0)\\
&\quad S_{\min}(i,k)=\min(S_{tmp}(i-1,k),\overline{S}(i,k));\\
&\quad S_{tmp}(i,k)=\overline{S}(i,k);\\
&else\\
&\quad S_{\min}(i,k)=\min(S_{tmp}(i-1,k),\overline{S}(i,k));\\
&\quad S_{tmp}(i,k)=\min(S_{tmp}(i-1,k),\overline{S}(i,k));\\
&end
\end{aligned}
\quad,
$$

In which, T is a constant representing a noise estimation value update period, that is, the comparison period; mod(i, T) represents a residual operation; $S_{\min}(i, k)$ represents a noise initial value corresponding to a k-th subband in an i-th frame; and $S_{tmp}(i, k)$ represents a noise temporary value in the process of solving the noise initial value.

In step S608, for each subband in each of the audio frames, a voice presence probability corresponding to the subband is determined according to the subband smooth power spectrum and the noise initial value corresponding to the subband.

For each subband in each of the audio frames, the server may directly use a ratio of the subband smooth power spectrum corresponding to the subband to the noise initial values corresponding to the subband as a voice presence probability corresponding to the subband, or may perform linear transformation on the ratio of the subband smooth power spectrum to the noise initial value to obtain the corresponding voice presence probability.

In some embodiments, step S608, that is, the process of determining, for each subband in each of the audio frames, a voice presence probability corresponding to the subband according to the subband smooth power spectrum and the noise initial value corresponding to the subband includes: for a current subband in a current frame being processed in the audio frames, using a quotient of a subband smooth power spectrum and a noise initial value of the current subband as a power ratio corresponding to the current subband in the current frame; using a first value as a voice presence value corresponding to the current subband in the current frame in a case that the power ratio is greater than a preset threshold; using a second value as the voice presence value corresponding to the current subband in the current frame in a case that the power ratio is less than or equal to the preset threshold, the second value being less than the first value; obtaining, in a historical frame previous to the current frame, a voice presence probability of a historical subband having a same subband number with the current subband; and determining a voice presence probability corresponding to the current subband in the current frame according to the voice presence probability corresponding to the historical subband and the voice presence value corresponding to the current subband.

For a current subband in a current frame being processed in the audio frames, the server may use a quotient of a subband smooth power spectrum and a noise initial value of the current subband as a power ratio corresponding to the current subband in the current frame. A first value is used as a voice presence value corresponding to the current subband in the current frame in a case that the power ratio is greater than a preset threshold. A second value is used as the voice presence value corresponding to the current subband in the current frame in a case that the power ratio is less than or equal to the preset threshold. The first value may be 1 and the second value may be 0. In this way, if the power ratio exceeds the threshold, it is considered that a voice is present; and if the power ratio is less than or equal to the threshold, it is considered that no voice is present. In an embodiment, the first value may be set to be 0.9 and the second value may be set to be 0.1; or other values may be selected as long as the first value is greater than the second value. The first value and the second value are not limited in the embodiments of the present application.

Further, the server may obtain a voice presence probability of a historical subband having a same subband number with the current subband in a historical frame previous to the current frame; and determine, by combining the voice presence probability corresponding to the historical subband and the voice presence value corresponding to the current subband, a voice presence probability corresponding to the current subband in the current frame. Specifically, weighted summation, logarithmic operation following multiplying, or another mathematical operation may be performed on the voice presence probability corresponding to the historical subband and the voice presence value corresponding to the current subband, to obtain the voice presence probability corresponding to the current subband in the current frame. In this way, a high misjudgment rate due to a high power ratio caused by ambient noise can be avoided, and a misjudgment can be corrected by the voice presence value. In addition, the voice presence probability of the current frame is determined with reference to the historical frames, so that the historical data is fully considered to improve the calculation accuracy.

It may be understood that, for each subband in each of the audio frames, the corresponding voice presence probability is calculated in the same manner until the voice presence probabilities corresponding to all the subbands in the audio frames are obtained.

In some embodiments, the computer device may calculate the voice presence probability corresponding to the current subband in the current frame by using the following formula:

$$S_r(i,k) = \overline{S}(i,k) / S_{\min}(i,k);$$

$$p(i,k) = \begin{cases} 1, S_r(i,k) > \delta \\ 0, S_r(i,k) \le \delta \end{cases}$$

$$\hat{p}(i,k) = \alpha_p \hat{p}(i-1,k) + (1-\alpha_p) p(i,k)$$

In which, $S_r(i, k)$ represents a power ratio corresponding to a k-th subband in a i-th frame, $\overline{S}(i,k)$ represents a subband smooth power spectrum of the k-th subband in the i-th frame, and $S_{min}(i, k)$ represents a noise initial value of the k-th subband in the i-th frame. $p(i, k)$ represents a voice presence value corresponding to the k-th subband in the i-th frame, $\hat{p}(i, k)$ represents a voice presence probability corresponding to the k-th subband in the i-th frame, and $\alpha_p$ represents a weight coefficient ranging from 0 to 1, for example, 0.6 or 0.8.

In the foregoing embodiment, the power ratio is gated to determine the presence of voice. In this way, a high misjudgment rate due to a high power ratio caused by ambient noise can be avoided and the misjudgment can be corrected by the voice presence value. In addition, the voice presence probability of the current frame is determined with reference to the historical frame, so that the historical data is fully considered to improve the calculation accuracy.

In step S610, for each subband in each of the audio frames, a noise estimation value corresponding to the subband is determined according to the voice presence probability and the subband power spectrum corresponding to the subband.

In some embodiments, for each subband in each of the audio frames, the server may use a difference between a value one and the voice presence probability as a noise presence probability corresponding to the subband, and use a product of the subband power spectrum and the noise presence probability as a noise estimation value corresponding to the subband.

In some embodiments, step S610, that is, the process of determining, for each subband in each of the audio frames, a noise estimation value corresponding to the subband according to the voice presence probability and the subband power spectrum corresponding to the subband includes: using a difference between a value one and the voice presence probability as a noise presence probability corresponding to the subband; obtaining, for a current subband in a current frame being processed in the audio frames, a noise estimation value corresponding to a historical subband having a same subband number with the current subband in a historical frame of the current frame; and calculating a sum of a first product of the noise estimation value corresponding to the historical subband and the voice presence probability corresponding to the current subband in the current frame and a second product of a subband power spectrum and a noise presence probability corresponding to the current subband in the current frame, to obtain a noise estimation value corresponding to the current subband in the current frame.

In some embodiments, the server may use a difference between a value one and the voice presence probability as a noise presence probability corresponding to the subband. For a current subband in a current frame being processed in the audio frames, a noise estimation value corresponding to a historical subband having a same subband number with the current subband in a historical frame of the current frame is obtained. The server may multiply the noise estimation value corresponding to the historical subband by the voice presence probability corresponding to the current subband in the current frame to obtain a first product. The server may multiply the subband power spectrum and the noise presence probability corresponding to the current subband in the current frame to obtain a second product. The server calculates a sum of the first product and the second product to obtain a noise estimation value corresponding to the current subband in the current frame. The noise estimation value corresponding to the historical subband having the same subband number with the current subband in the historical frames of the current frame obtained by the server may specifically be a noise estimation value corresponding to a historical subband having the same subband number with the current subband in an N-th (N is a positive integer greater than or equal to 1) frame previous to the current frame.

In some embodiments, the computer device may calculate the noise estimation value corresponding to the current subband in the current frame by using the following formula: $\hat{S}_n(i, k) = \hat{p}(i, k)\hat{S}_n(i-1, k) + (1 - \hat{p}(i, k))S(i, k)$; where $\hat{S}_n(i, k)$ represents a noise estimation value corresponding to a k-th subband in an i-th frame; $\hat{p}(i, k)$ represents a voice presence probability corresponding to the k-th subband in the i-th frame; $\hat{S}_n(i-1, k)$ represents a noise estimation value corresponding to a k-th subband in an (i-1)-th frame; and $S(i, k)$ represents a subband power spectrum corresponding to the k-th subband in the i-th frame.

In the foregoing embodiment, the noise estimation value corresponding to each of the subbands in the current frame is determined with reference to the noise estimation values of the historical frames, so that the continuity of sound in time can be fully considered to improve the estimation accuracy.

In some embodiments, the process of determining, for each call audio, voice adjustment parameters corresponding to the audio frames based on the single-frame signal-to-noise ratios corresponding to the audio frames in the call audio includes: calculating, for a current frame being processed in the audio frames of the call audio, an instant voice adjustment parameter based on a single-frame signal-to-noise ratio corresponding to the current frame; determining a historical voice adjustment parameter corresponding to a historical frame previous to the current frame; determining a voice adjustment parameter corresponding to the current frame according to the historical voice adjustment parameter and the instant voice adjustment parameter corresponding to the current frame; and processing a subsequent frame after the current frame until the voice adjustment parameters corresponding to the audio frames are obtained.

For a current frame being processed in the audio frames of each call audio, the server may calculate an instant voice adjustment parameter based on a single-frame signal-to-noise ratio corresponding to the current frame. A historical voice adjustment parameter corresponding to a historical frame previous to the current frame is determined, and a voice adjustment parameter corresponding to the current frame is determined according to the historical voice adjustment parameter and the instant voice adjustment parameter corresponding to the current frame.

In some embodiments, the server may fuse the historical voice adjustment parameter with the instant voice adjustment parameter corresponding to the current frame, to obtain the voice adjustment parameter corresponding to the current frame. The fusion may be performed by mathematical operation, and the fusion manner is not limited in the embodiments of the present disclosure. For example, the server may calculate a weighted sum of the historical voice adjustment parameter and the instant voice adjustment parameter corresponding to the current frame, to obtain the voice adjustment parameter corresponding to the current frame. For another example, the server may perform logarithm operation on the historical voice adjustment parameter and the instant voice adjustment parameter corresponding to the current frame, and then multiply results of logarithm operation, to obtain the voice adjustment parameter corresponding to the current frame. For each frame in the call audio, the server calculates the voice adjustment parameter corresponding to each voice frame by using the same manner, to obtain the voice adjustment parameters corresponding to the audio frames.

In some embodiments, the computer device may calculate the voice adjustment parameter corresponding to the current frame by using the following formula: $gain(i) = \beta * gain\_inst(i) + (1 - \beta) * gain(i-1)$; where $gain(i)$ represents a voice adjustment parameter corresponding to an i-th audio frame; $gain(i-1)$ represents a voice adjustment parameter corresponding to an (i-1)-th audio frame; $gain\_inst(i)$ represents an instant voice adjustment parameter corresponding to the i-th audio frame; and $\beta$ represents a weight factor, for example, 0.3.

In some embodiments, the process of calculating, for a current frame being processed in the audio frames of the call audio, an instant voice adjustment parameter based on a single-frame signal-to-noise ratio corresponding to the current frame includes: determining a maximum signal-to-noise ratio and a minimum signal-to-noise ratio from the single-frame signal-to-noise ratios corresponding to the audio frames in the call audio; determining a first difference according to a difference between the maximum signal-to-noise ratio and the minimum signal-to-noise ratio; determining, for the current frame being processed in the audio frames of the call audio, a second difference according to a difference between the single-frame signal-to-noise ratio corresponding to the current frame and the minimum signal-to-noise ratio; and determining the instant voice adjustment parameter corresponding to the current frame according to a preset minimum gain value, the first difference, and the second difference.

In some embodiments, the computer device may calculate the instant voice adjustment parameter corresponding to the current frame by using the following formula:

$$gain\_inst(i) = \min\{1, G_{\min} + \max[0, \frac{10*\log_{10} Snr\_frame(i) - MinSnrDB}{MaxSnrDB - MinSnrDB} * (1 - G_{\min})]\};$$

where $G_{\min}$ represents a preset minimum voice adjustment parameter; *MaxSnrDB* and *MinSnrDB* respectively represent a maximum signal-to-noise ratio and a minimum signal-to-noise ratio in dB, which may be set according to the actual application scenario; and *Snr_frame*(*i*) represents a single-frame signal-to-noise ratio of an i-th frame.

In the foregoing embodiment, the corresponding voice adjustment parameters are determined based on the single-frame signal-to-noise ratios corresponding to the audio frames. The voice adjustment parameters are increased with increasing of the single-frame signal-to-noise ratios and are decreased with decreasing of the single-frame signal-to-noise ratios, until the voice adjustment parameters are decreased to the preset minimum voice adjustment parameter. In this way, a call member with low voice activity generates little interference on a call member with relatively high activity, thereby improving the overall call effect and quality.

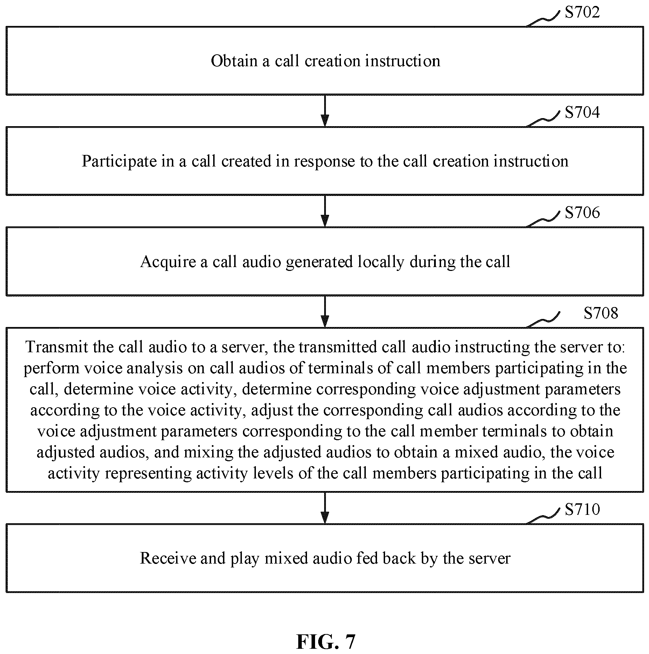

As shown in FIG. 7, in some embodiments, a call audio mixing processing method is provided. In this embodiment, the method is applied to the terminal 110 (also referred to as a call member terminal) in FIG. 1. Referring to FIG. 7, the call audio mixing processing method includes the following steps S702 to S710.

In step S702, a call creation instruction is obtained.

A call creation instruction is an instruction used for creating a call. Specifically, the member terminal includes a first terminal and a second terminal. The first terminal may actively trigger a call creation instruction via a call application in response to an operation of a user, and send the call creation instruction to the second terminal. The first terminal establishes a communication link with the second terminal when receiving an acceptance response from the second terminal. The second terminal may receive the call creation instruction from the first terminal and make the acceptance response to establish a call link with the first terminal.

In step S704, a call created in response to the call creation instruction is participated in.

Both the first terminal and the second terminal may participate in a corresponding call according to the created call link.

In step S706, a call audio generated locally during the call is acquired.

When a call member speaks, the call member terminal may acquire, via a sound acquiring device, a call audio generated by the call member during the call.

In step S708, the call audio is transmitted to a server. The transmitted call audio is used for instructing the server to: perform voice analysis on call audios of terminals of call members participating in the call, determine corresponding voice activity, determine corresponding voice adjustment parameters according to the voice activity, adjust the corresponding call audios according to the voice adjustment parameters corresponding to the call member terminals to obtain adjusted audios, and mix the adjusted audios to obtain a mixed audio. The voice activity represents activity levels of the call members participating in the call.

Both the first terminal and the second terminal may send the acquired call audios to the server, so that the server may process the call audios to obtain a mixed audio. Regarding how the server processes the call audios to obtain the mixed audio, one may refer to the description in the above embodiments, and details are not described again herein.

In some embodiments, step S708, that is, the process of transmitting the call audios to a server includes: performing voice enhancement processing on the call audio, the voice enhancement processing including at least one of voice noise reduction processing, echo cancellation processing, and voice volume adjustment processing; and transmitting the call audio subjecting to the voice enhancement processing to the server.

In some embodiments, the call member terminal may send the acquired call audio subjected to the voice enhancement processing to the server. The voice enhancement processing includes at least one of voice noise reduction processing, echo cancellation processing, and voice volume adjustment processing, which can improve the voice quality of the transmitted call audio. The voice noise reduction processing is performed to reduce noise content in the call audio, for example, performing noise reduction processing through a suppression algorithm. Echo cancellation is performed to eliminate echoes in the call audio, which may be implemented by using, for example, acoustic echo cancellation (AEC) and line echo cancellation (LEC) technologies. Voice volume adjustment processing is performed to increase the volume of the call audio. In this way, the voice quality of the call audio sent to the server can be improved to reduce the processing load of the server.

In some embodiments, the call member terminal may encode the call audio subjected to the voice enhancement processing and then send the encoded call audio to the server. For the specific encoding mode and the decoding mode of the server, one may refer to the description in the above embodiments. Details are not repeated herein.

In step S710, the mixed audio fed back by the server is received and played.

Both the first terminal and the second terminal participating in the call may receive the mixed audio fed back by the server and play the mixed audio via a speaker.

In some embodiments, the server may feed back the encoded mixed audio. That is, the call member terminal receives the encoded mixed voice fed back by the server. The call member terminal may decode the encoded mixed voice by using a corresponding decoding mode to obtain the corresponding mixed audio.

In the foregoing call audio processing method, the call audios generated by the call members during the call are acquired and reported to the server, and the server performs voice analysis on the call audios corresponding to the terminals of the call members participating in the call, to determine the voice activity corresponding to the call member terminals. The server controls the voice adjustment parameters of the call members according to the voice activity, and adjusts the call audios according to the corresponding voice adjustment parameters so as to obtain the adjusted audios, mix the adjusted audios, and feed back the mixed audio to the call member terminals for playing. In this way, with the voice-activity-based voice modulation mechanism, the interference to an active user from ambient noise of an inactive user during the call can be reduced, so that a call member with low voice activity generates little interference on a call member with high voice activity, and the overall call effect and quality are improved. Moreover, the number of participants is not limited during the mixing processing, to avoid the problem that the call members cannot "produce a voice" once the number of participants exceeds a predetermined value, thereby improving the call quality effectively.

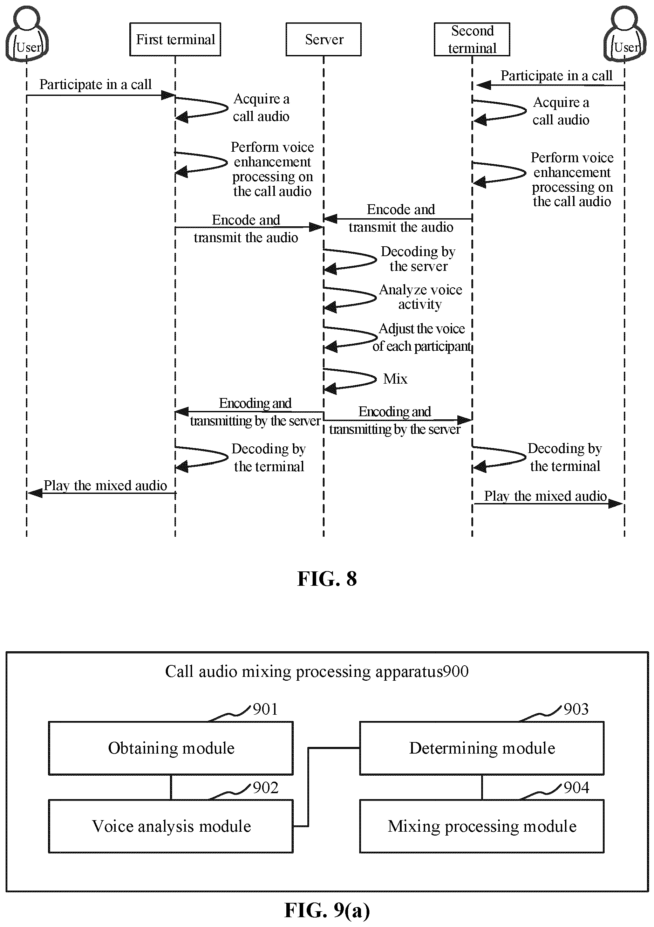

Referrence is made to FIG. 8 which is a sequence diagram of a call audio processing method according to an embodiment. As shown in FIG. 8, different users participate in a call through a first terminal and a second terminal respectively. The first terminal and the second terminal respectively acquire the call audios and perform voice enhancement processing. The first terminal and the second terminal respectively encode the call audios subjected to the voice enhancement processing and transmit the encoded call audios to the server. The server decodes the received call audios and analyzes voice activity, so as to adjust the voice of each participant, and finally mixes the adjusted audios to obtain a mixed audio. The server encodes the mixed audio and transmits the encoded mixed audio to the first terminal and second terminal, and the first terminal and the second terminal decode and play the mixed audio respectively.

FIG. 8 is a schematic flowchart of a call audio processing method according to an embodiment. It is to be understood that, although steps of the flowchart in FIG. 8 are displayed sequentially according to arrows, the steps are not necessarily to be performed according to an order indicated by arrows. Unless otherwise explicitly specified in the present disclosure, execution of the steps is not strictly limited, and the steps may be performed in other sequences. In addition, at least some steps in FIG. 8 may include multiple substeps or multiple stages. The substeps or the stages are not necessarily performed at the same time instant, and may be performed at different time instants. The substeps or the stages are not necessarily performed in sequence, and may be performed in turn or alternately with another step or at least some of substeps or stages of the another step.

As shown in FIG. 9(a), in some embodiments, a call audio mixing processing apparatus 900 is provided. The apparatus includes an obtaining module 901, a voice analysis module 902, a determining module 903, and a mixing processing module 904.

The obtaining module 901 is configured to obtain call audios transmitted by terminals of call members participating in a call.

The voice analysis module 902 is configured to perform voice analysis on each of the call audios to determine voice activity corresponding to each of the call member terminals. The voice activity represents activity levels of the call members participating in the call.

The determining module 903 is configured to determine, according to the voice activity, voice adjustment parameters corresponding to the call member terminals.

The mixing processing module 904 is configured to adjust, according to the voice adjustment parameters, the corresponding call audios to obtain adjusted audios, and mix the adjusted audios to obtain a mixed audio.

In some embodiments, the obtaining module 901 is further configured to receive encoded audio data transmitted by the terminals of the call members participating in the call, the encoded audio data being obtained by encoding acquired call audios by using encoding modes matching performances of the corresponding terminals; and decode, according to decoding modes matching the encoding modes, the encoded audio data transmitted by the call member terminals to obtain the corresponding call audios.

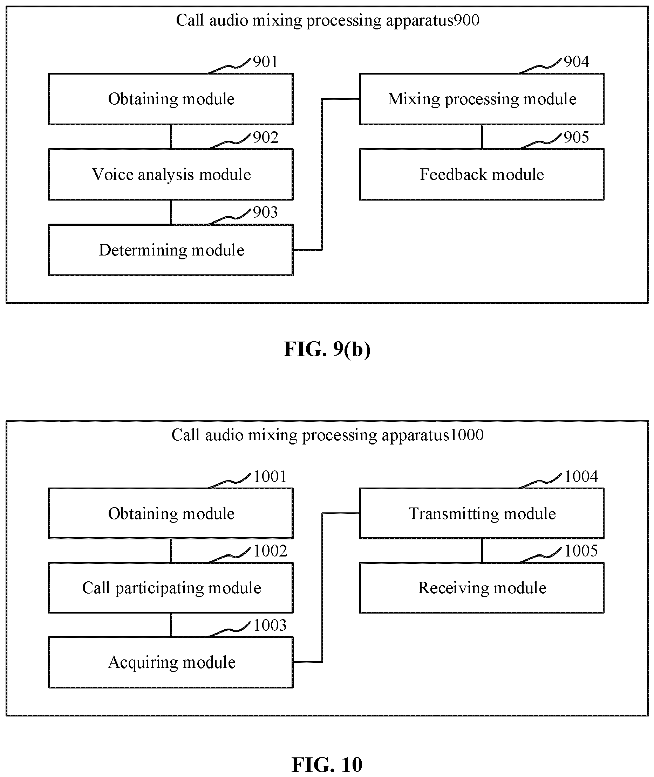

Referring to FIG. 9(b), in some embodiments, the call audio mixing processing apparatus 900 further includes a feedback module 905. The feedback module 905 is configured to: encode the mixed audio by using encoding modes matching the performance of the call member terminals, to obtain mixed encoded voices corresponding to the different encoding modes; and transmit, according to the encoding modes corresponding to the mixed encoded voices, the mixed encoded voices to the respective call member terminals matching the encoding modes and participating in the call, the transmitted mixed encoded voices being used for instructing the call member terminals to decode the mixed encoded voices by using decoding modes matching the encoding modes, to obtain the corresponding mixed audio.

In some embodiments, the voice analysis module 902 is further configured to divide each of the call audios into more than one audio frames and perform voice detection on each of the audio frames; determine a quantity of voice frames in the audio frames in each of the call audios; determine, for each call audio, a proportion of the voice frames according to the quantity of the voice frames and a total quantity of the audio frames in the call audio; and determine, according to the proportion of the voice frames, the voice activity of each of the call member terminals.

In some embodiments, the voice analysis module 902 is further configured to divide each of the call audios into more than one audio frames and perform voice detection on each of the audio frames; determine voice frames in the audio frames and determine energy values corresponding to the voice frames; and determine, according to a quantity of valid voice frames with energy values greater than or equal to an energy threshold in the voice frames included in the call audio, the voice activity of each of the call member terminals.

In some embodiments, the voice analysis module 902 is further configured to divide each of the call audios into more than one audio frames and calculate single-frame signal-to-noise ratios corresponding to the audio frames; calculate, for each call audio, a weighted sum of the single-frame signal-to-noise ratios corresponding to the audio frames in the call audio, to obtain a voice signal-to-noise ratio corresponding to the call audio; and use the voice signal-to-noise ratios corresponding to the call audios as the voice activity of the call member terminals.

In some embodiments, the voice analysis module 902 is further configured to divide each of the call audios into more than one audio frames and calculate single-frame signal-to-noise ratios corresponding to the audio frames. The determining module 903 is further configured to determine, for each call audio, voice adjustment parameters corresponding to the audio frames based on the single-frame signal-to-noise ratios corresponding to the audio frames in the call audio. The mixing processing module 904 is further configured to adjust, for each call audio, the audio frames according to the voice adjustment parameters corresponding to the audio frames in the call audio, to obtain the adjusted audio corresponding to the call member terminal.

In some embodiments, the determining module 903 is further configured to determine a maximum voice activity value of the voice activity corresponding to the call member terminals; and determine the voice adjustment parameters corresponding to the call member terminals according to comparison values between the voice activity corresponding to the call member terminals and the maximum voice activity value. The voice adjustment parameters corresponding to the call member terminals are negatively correlated with the comparison values.

In some embodiments, the voice analysis module 902 is further configured to divide, for the call audio corresponding to each call member terminal, the corresponding call audio into more than one audio frames located in a time domain space; convert the audio frames from the time domain space to a frequency domain space to obtain corresponding voice spectra, and determine more than one subbands in each of the voice spectra corresponding to the audio frames; for the subbands in each of the audio frames, calculate subband power spectra and noise estimation values corresponding to the subbands, and determine subband signal-to-noise ratios corresponding to the subbands based on the subband power spectra and the noise estimation values; and calculate the single-frame signal-to-noise ratio corresponding to the audio frame according to the subband signal-to-noise ratios corresponding to the subbands in each of the audio frames.

In some embodiments, the voice analysis module 902 is further configured to determine, for each subband in each of the audio frames, the subband power spectrum corresponding to the subband based on frequency domain complex values of frequency points in the subband; perform smoothing processing on the subband power spectra to obtain corresponding subband smooth power spectra; select a minimum value from subband smooth power spectra corresponding to subbands with a same subband number in different audio frames, as a noise initial value corresponding to the subbands with the same subband number; determine, for each subband in each of the audio frames, a voice presence probability corresponding to the subband according to the subband smooth power spectrum and the noise initial value corresponding to the subband; and determine, for each subband in each of the audio frames, a noise estimation value corresponding to the subband according to the voice presence probability and the subband power spectrum corresponding to the subband.

In some embodiments, the voice analysis module 902 is further configured to determine, for a current subband in a current frame being processed in the audio frames, a preset quantity of adjacent subbands adjacent to the current subband in the current frame; combine the adjacent subbands and the current subband to form a subband sequence; calculate a weighted sum, according to weights corresponding to the subband sequence, of the subband power spectra of the subbands in the subband sequence to obtain a frequency domain smooth power spectrum corresponding to the current subband in the current frame; and calculate a weighted sum of a frequency domain smooth power spectrum of a historical subband having a same subband number with the current subband in a frame previous to the current frame and the frequency domain smooth power spectrum of the current subband in the current frame, to obtain a subband smooth power spectrum corresponding to the current subband in the current frame.

In some embodiments, the voice analysis module 902 is further configured to: for a current subband in a current frame being processed in the audio frames, use a quotient of a subband smooth power spectrum and a noise initial value of the current subband as a power ratio corresponding to the current subband in the current frame; use a first value as a voice presence value corresponding to the current subband in the current frame in a case that the power ratio is greater than a preset threshold; use a second value as the voice presence value corresponding to the current subband in the current frame in a case that the power ratio is less than or equal to the preset threshold, the second value being less than the first value; obtain, in a historical frame previous to the current frame, a voice presence probability of a historical subband having a same subband number with the current subband; and determine a voice presence probability corresponding to the current subband in the current frame according to the voice presence probability corresponding to the historical subband and the voice presence value corresponding to the current subband.

In some embodiments, the voice analysis module 902 is further configured to use a difference between a value one and the voice presence probability as a noise presence probability corresponding to the subband; obtain, for a current subband in a current frame being processed in the audio frames, a noise estimation value corresponding to a historical subband having a same subband number with the current subband in a historical frame of the current frame; and calculate a sum of a first product of the noise estimation value corresponding to the historical subband and the voice presence probability corresponding to the current subband in the current frame and a second product of a subband power spectrum and a noise presence probability corresponding to the current subband in the current frame, to obtain a noise estimation value corresponding to the current subband in the current frame.

In some embodiments, the determining module 903 is further configured to calculate, for a current frame being processed in the audio frames of the call audio, a corresponding instant voice adjustment parameter based on a single-frame signal-to-noise ratio corresponding to the current frame; determine a historical voice adjustment parameter corresponding to a historical frame previous to the current frame; determine a voice adjustment parameter corresponding to the current frame according to the historical voice adjustment parameter and the instant voice adjustment parameter corresponding to the current frame; and process a subsequent frame after the current frame until the voice adjustment parameters corresponding to the audio frames are obtained.

In some embodiments, the determining module 903 is further configured to determine a maximum signal-to-noise ratio and a minimum signal-to-noise ratio from the single-frame signal-to-noise ratios corresponding to the audio frames in the call audio; determine a first difference according to a difference between the maximum signal-to-noise ratio and the minimum signal-to-noise ratio; determine, for the current frame being processed in the audio frames of the call audio, a second difference according to a difference between the single-frame signal-to-noise ratio corresponding to the current frame and the minimum signal-to-noise ratio; and determine the instant voice adjustment parameter corresponding to the current frame according to a preset minimum gain value, the first difference, and the second difference.

The foregoing call audio processing apparatus performs voice analysis on the call audios corresponding to the terminals of the call members participating in the call to determine the voice activity corresponding to the call member terminals. The voice adjustment parameters of the call member terminals are controlled according to the voice activity, so that the call audios are adjusted according to the corresponding voice adjustment parameters to obtain adjusted audios, and the adjusted audios are mixed to obtain a mixed audio. In this way, with the voice-activity-based voice modulation mechanism, the interference to an active user from ambient noise of an inactive user during the call can be reduced, so that a call member with low voice activity generates little interference on a call member with high voice activity, and the overall call effect and quality are improved. Moreover, the number of participants is not limited during the mixing processing, to avoid the problem that call member cannot "produce a voice" once the number of participants exceeds a predetermined value, thereby further improving the call quality effectively.

As shown in FIG. 10, in some embodiments, a call audio processing apparatus 1000 is provided. The apparatus includes an obtaining module 1001, a call participating module 1002, an acquiring module 1003, a transmitting module 1004, and a receiving module 1005.

The obtaining module 1001 is configured to obtain a call creation instruction.

The call participating module 1002 is configured to participate in, a call created in response to the call creation instruction.

The acquiring module 1003 is configured to acquire a call audio generated locally during the call.

The transmitting module 1004 is configured to transmit the call audio to a server, the transmitted call audio being used for instructing the server to: perform voice analysis on call audios of terminals of call members participating in the call, determine voice activity, determine corresponding voice adjustment parameters according to the voice activity, adjust the call audios according to the voice adjustment parameters corresponding to the call member terminals to obtain adjusted audios, and mixing the adjusted audios to obtain a mixed audio. The voice activity represents activity levels of the call members participating in the call.

The receiving module 1005 is configured to receive and play the mixed audio fed back by the server.

In some embodiments, the transmitting module 1004 is further configured to perform voice enhancement processing on the call audio, the voice enhancement processing including at least one of voice noise reduction processing, echo cancellation processing, and voice volume adjustment processing; and transmit the call audio subjected to the voice enhancement processing to the server.

By using the foregoing call audio mixing processing apparatus, the call audios generated by the call members participating in the call are acquired and reported to the server, and the server performs voice analysis on the call audios corresponding to the terminals of the call members participating in the call, to determine the voice activity corresponding to the call member terminals. The server controls the voice adjustment parameters of the call member terminals according to the voice activity, so that the call audios are adjusted according to the corresponding voice adjustment parameters to obtain adjusted voice, the adjusted audios are mixed, and the mixed audio is feed back to the call member terminals for playing. In this way, with the voice-activity-based voice modulation mechanism, the interference to an active user from ambient noise of an inactive user during the call can be reduced, so that a call member with low voice activity generates little interference on a call member with high voice activity, and the overall call effect and quality are improved. Moreover, the number of participants is not limited during the mixing processing, to avoid the problem that call members cannot "produce a voice" once the number of participants exceeds a predetermined value, thereby improving the call quality effectively.

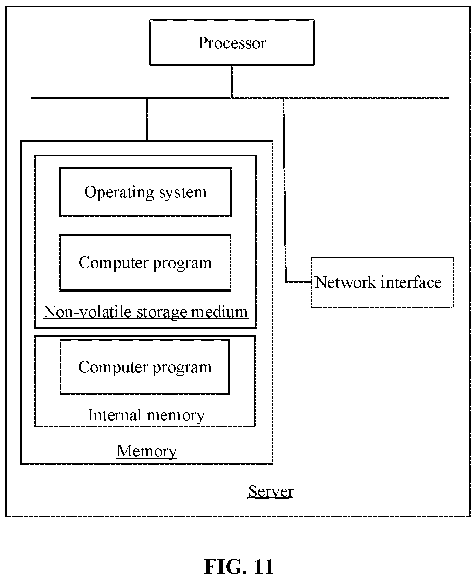

FIG. 11 is a diagram of an internal structure of a computer device according to an embodiment. The computer device may be the server 120 in FIG. 1. As shown in FIG. 11, the server includes a processor, a memory and a network interface that are connected via a system bus. The memory includes a non-volatile storage medium and an internal memory. The non-volatile storage medium of the computer device stores an operating system and may further store a computer program. The computer program, when executed by the processor, causes the processor to implement the call audio mixing processing method. The internal memory may also store a computer program. The computer program, when executed by the processor, may cause the processor to perform the call audio mixing processing method.

A person skilled in the art may understand that, the structure shown in FIG. 11 is only a block diagram of a part of a structure correlated to a solution of the present disclosure and does not limit the computer device to which the solution of the present disclosure is applied. Specifically, the computer device may include more or fewer members than those in the drawings, or include a combination of some members, or include different member layouts.

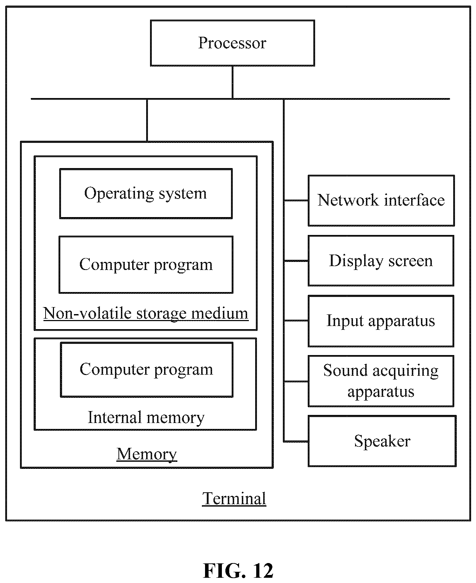

FIG. 12 is a diagram of an internal structure of a computer device according to an embodiment. The computer device may be the terminal 110 in FIG. 1. As shown in FIG. 12, the terminal includes a processor, a memory, a network interface, an input apparatus, a display screen, a sound acquiring apparatus, and a speaker that are connected through a system bus. The memory includes a non-volatile storage medium and an internal memory. The non-volatile storage medium of the computer device stores an operating system and may further store a computer program. The computer program, when executed by the processor, causes the processor to implement the call audio mixing processing method. The internal memory may also store a computer program. The computer program, when executed by the processor, may cause the processor to perform the call audio mixing processing method. The display screen of the computer device may be a liquid crystal display screen or an e-ink display screen. The input apparatus of the computer device may be a touch layer covering the display screen, or a button, a trackball, or a touchpad arranged on a housing of the computer device, or an external keyboard, touchpad, mouse, or the like.

A person skilled in the art may understand that, the structure shown in FIG. 12 is only a block diagram of a part of a structure correlated to a solution of the present disclosure and does not limit the computer device to which the solution of the present disclosure is applied. Specifically, the computer device may include more or fewer members than those in the drawings, or include a combination of some members, or include different member layouts.

In some embodiments, the call audio mixing processing apparatus provided in the present disclosure may be implemented in the form of a computer program. The computer program may be run on the computer device shown in FIG. 11 or FIG. 12. A memory of the computer device may store program modules forming the call audio mixing processing apparatus, for example, the obtaining module, the voice analysis module, the determining module, the mixing processing module, and the feedback module shown in FIG. 9. A computer program formed by the program modules causes the processor to perform steps in the call audio mixing processing method in the embodiments of the present disclosure described in this specification. For example, the memory may further store the obtaining module, the call participating module, the acquiring module, the transmitting module, and the receiving module shown in FIG. 10.

For example, the computer device shown in FIG. 11 may perform step S202 by using the obtaining module in the call audio mixing processing apparatus shown in FIG. 9. The computer device may perform step S204 by using the voice analysis module. The computer device may perform step S206 by using the determining module. The computer device may perform step S208 by using the mixing processing module. The computer device may perform step S210 by using the feedback module.

For another example, the computer device shown in FIG. 12 may perform step S702 by using the obtaining module in the call audio mixing processing apparatus shown in FIG. 10. The computer device may perform step S704 by using the call participating module. The computer device may perform step S706 by using the acquiring module. The computer device may perform step S708 by using the transmitting module. The computer device may perform step S710 by using the receiving module.

In some embodiments, a computer device is provided, including a memory and one or more processors. The memory stores computer-readable instructions. The computer-readable instructions, when executed by the processors, cause the one or more processors to perform the steps in the foregoing call audio mixing processing method. The steps in the call audio mixing processing method may be steps in the call audio mixing processing method in the foregoing embodiments.

In some embodiments, one or more non-volatile readable storage media storing computer-readable instructions are provided. The computer-readable instructions, when executed by one or more processors, cause the one or more processors to perform the steps of the call audio mixing processing method. The steps in the call audio mixing processing method may be steps in the call audio mixing processing method in the foregoing embodiments.

A person of ordinary skill in the art may understand that all or some of procedures of the method in the foregoing embodiments may be implemented by a computer program instructing relevant hardware. The program may be stored in a non-volatile computer-readable storage medium. When the program is executed, the procedures of the foregoing method embodiments may be implemented. The memory, the storage, the database, or other media used in the embodiments provided in the present disclosure may all include a non-volatile or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a RAM or an external cache. As illustration rather than limitation, the RAM may be acquired in multiple forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a Rambus direct RAM (RDRAM), a direct rambus dynamic RAM (DRDRAM), and a rambus dynamic RAM (RDRAM).

Technical features of the foregoing embodiments may be randomly combined. For conciseness, not all possible combinations of the technical features in the foregoing embodiments are described. However, the combinations of these technical features shall be considered as falling within the scope disclosed by the specification as long as no conflict exists.

The foregoing embodiments show only several implementations of the present disclosure and are described in detail. The embodiments are not to be construed as a limitation to the protection scope of the present disclosure. It should be noted that for a person of ordinary skill in the art, several variations and improvements can be made without departing from the concept of the present disclosure. These variations and improvements fall within the protection scope of the present disclosure. Therefore, the protection scope of the present disclosure is defined according to the appended claims.

**Claims**

1. A call audio mixing processing method, executable by a server, the method comprising:

   obtaining (S202) call audios transmitted by terminals of call members participating in a call;
   performing (S204) voice analysis on each of the call audios to determine voice activity corresponding to each of the call member terminals, wherein the voice activity represents an activity level of each of the call members participating in the call;
   determining (S206), according to the voice activity, voice adjustment parameters corresponding to the call member terminals; and
   adjusting (S208), according to the voice adjustment parameters, the corresponding call audios to obtain adjusted audios, and mixing the adjusted audios to obtain a mixed audio,
   wherein the performing voice analysis on each of the call audios to determine voice activity corresponding to each of the call member terminals comprises:

      dividing each of the call audios into more than one audio frames and calculating single-frame signal-to-noise ratios corresponding to the audio frames;
      wherein the determining, according to the voice activity, voice adjustment parameters corresponding to the call member terminals comprises:

         determining, for each call audio, voice adjustment parameters corresponding to the audio frames based on the single-frame signal-to-noise ratios corresponding to the audio frames in the call audio; and
         wherein the adjusting, according to the voice adjustment parameters, the corresponding call audios to obtain adjusted audios comprises:

            adjusting, for each call audio, the audio frames according to the voice adjustment parameters corresponding to the audio frames in the call audio, to obtain the adjusted audio corresponding to the call member terminal;
            wherein the determining, for each call audio, voice adjustment parameters corresponding to the audio frames based on the single-frame signal-to-noise ratios corresponding to the audio frames in the call audio comprises:

calculating, for a current frame being processed in the audio frames of the call audio, an instant voice adjustment parameter based on the single-frame signal-to-noise ratio corresponding to the current frame;
determining a historical voice adjustment parameter corresponding to a historical frame previous to the current frame;
determining a voice adjustment parameter corresponding to the current frame according to the historical voice adjustment parameter and the instant voice adjustment parameter corresponding to the current frame; and
processing a subsequent frame after the current frame until the voice adjustment parameters corresponding to the audio frames are obtained.

2. The method according to claim 1, wherein the obtaining call audios transmitted by terminals of call members participating in a call comprises:

receiving encoded audio data transmitted by the terminals of the call members participating in the call, wherein the encoded audio data is obtained by encoding acquired call audios by using an encoding mode matching performance of the corresponding terminal; and
decoding, according to a respective decoding mode matching the encoding mode, the corresponding encoded audio data transmitted by the call member terminals to obtain the corresponding call audio.

3. The method according to claim 2, further comprising:

encoding the mixed audio by using an encoding mode matching the performance of the call member terminals, to obtain mixed encoded voices corresponding to different encoding modes; and
transmitting, according to the encoding modes corresponding to the mixed encoded voices, the mixed encoded voices to the respective call member terminals matching the encoding modes and participating in the call, wherein the transmitted mixed encoded voices instruct the call member terminals to decode the mixed encoded voices with decoding modes corresponding to the encoding modes, to obtain the corresponding mixed audio.

4. The method according to claim 1, wherein the performing voice analysis on each of the call audios to determine voice activity corresponding to each of the call member terminals comprises:

dividing each of the call audios into more than one audio frames and performing voice detection on each of the audio frames;
determining a quantity of voice frames in the audio frames for each call audio;
determining, for each call audio, a proportion of the voice frames according to the quantity of the voice frames in the call audio and a total quantity of the audio frames in the call audio; and
determining, according to the proportion of the voice frames, the voice activity corresponding to each of the call member terminals;
or wherein the performing voice analysis on each of the call audios to determine voice activity corresponding to each of the call member terminals comprises:

dividing each of the call audios into more than one audio frames and performing voice detection on each of the audio frames;
determining voice frames in the audio frames and determining energy values corresponding to the voice frames; and
determining the voice activity corresponding to each of the call member terminals according to a quantity of valid voice frames with energy values greater than or equal to an energy threshold among the voice frames in the call audio;
or wherein the performing voice analysis on each of the call audios to determine voice activity corresponding to each of the call member terminals comprises:

dividing each of the call audios into more than one audio frames and calculating single-frame signal-to-noise ratios corresponding to the audio frames;
calculating, for each call audio, a weighted sum of the single-frame signal-to-noise ratios corresponding to the audio frames in the call audio, to obtain a voice signal-to-noise ratio corresponding to the call audio; and
using the voice signal-to-noise ratio corresponding to the call audio as the voice activity corresponding to the call member terminal.

5. The method according to claim 1, wherein the determining, according to the voice activity, voice adjustment parameters corresponding to the call member terminals comprises:

determining a maximum voice activity among the voice activity corresponding to the call member terminals; and
determining the voice adjustment parameters corresponding to the call member terminals according to comparison values between the voice activity corresponding to the call member terminals and the maximum voice activity, wherein the voice adjustment parameters corresponding to the call member terminals are negatively correlated with the corresponding comparison values.

6. The method according to claim 1 or 4, wherein the dividing each of the call audios into more than one audio frames and calculating single-frame signal-to-noise ratios corresponding to the audio frames comprises:

dividing, for a call audio corresponding to each call member terminal, the call audio into more than one audio frames in a time domain space;
converting the audio frames from the time domain space to a frequency domain space to obtain corresponding voice spectra, and determining more than one subbands in each of the voice spectra corresponding to the audio frames;
calculating, for the subbands in the audio frame, subband power spectra and noise estimation values corresponding to the subbands, and determining, based on the subband power spectra and the noise estimation values, subband signal-to-noise ratios corresponding to the subbands; and
calculating the single-frame signal-to-noise ratio corresponding to the audio frame according to the subband signal-to-noise ratios corresponding to the subbands in the audio frame.

7. The method according to claim 6, wherein the calculating, for the subbands in each of the audio frames, subband power spectra and noise estimation values corresponding to the subbands comprises:

determining, for each subband in each of the audio frames, the subband power spectrum corresponding to the subband based on frequency domain complex values of frequency points in the subband;
performing smoothing processing on the subband power spectra to obtain corresponding subband smooth power spectra;
selecting a minimum value of subband smooth power spectra corresponding to subbands with a same subband number in different audio frames, as a noise initial value corresponding to the subbands with the same subband number;
determining, for the subband in each of the audio frames, a voice presence probability corresponding to the subband according to the subband smooth power spectrum and the noise initial value corresponding to the subband; and
determining, for the subband in each of the audio frames, a noise estimation value corresponding to the subband according to the voice presence probability and the subband power spectrum corresponding to the subband.

8. The method according to claim 7, wherein the performing smoothing processing on the subband power spectra to obtain corresponding subband smooth power spectra comprises:

determining, for a current subband in a current frame being processed in the audio frames, a preset quantity of adjacent subbands adjacent to the current subband in the current frame;
combining the adjacent subbands and the current subband to form a subband sequence;
calculating a weighted sum of the power spectra of the subbands in the subband sequence according to a weight corresponding to the subband sequence, to obtain a frequency domain smooth power spectrum corresponding to the current subband in the current frame; and
calculating a weighted sum of a frequency domain smooth power spectrum of a historical subband having a same subband number with the current subband in a frame previous to the current frame and the frequency domain smooth power spectrum of the current subband in the current frame, to obtain a subband smooth power spectrum corresponding to the current subband in the current frame.

9. The method according to claim 7, wherein the determining, for each subband in each of the audio frames, a voice presence probability corresponding to the subband according to the subband smooth power spectrum and the noise initial value corresponding to the subband comprises:

using, for a current subband in a current frame being processed in the audio frames, a quotient of a subband smooth power spectrum and a noise initial value of the current subband as a power ratio corresponding to the current subband in the current frame;

using a first value as a voice presence value corresponding to the current subband in the current frame in a case that the power ratio is greater than a preset threshold;

using a second value as the voice presence value corresponding to the current subband in the current frame in a case that the power ratio is less than or equal to the preset threshold, wherein the second value is less than the first value;

obtaining, from a historical frame previous to the current frame, a voice presence probability of a historical subband having a same subband number with the current subband; and

determining a voice presence probability corresponding to the current subband in the current frame according to the voice presence probability corresponding to the historical subband and the voice presence value corresponding to the current subband.

10. The method according to claim 7, wherein the determining, for the subband in each of the audio frames, a noise estimation value corresponding to the subband according to the voice presence probability and the subband power spectrum corresponding to the subband comprises:

using a difference between value one and the voice presence probability as a noise presence probability corresponding to the subband;

obtaining, for a current subband in a current frame being processed in the audio frames, a noise estimation value corresponding to a historical subband with a same subband number as the current subband in a historical frame of the current frame; and

calculating a sum of a first product of the noise estimation value corresponding to the historical subband and the voice presence probability corresponding to the current subband in the current frame and a second product of the subband power spectrum and the noise presence probability corresponding to the current subband in the current frame, to obtain a noise estimation value corresponding to the current subband in the current frame.

11. The method according to claim 1, wherein the calculating, for a current frame being processed in the audio frames of the call audio, an instant voice adjustment parameter based on the single-frame signal-to-noise ratio corresponding to the current frame comprises:

determining a maximum signal-to-noise ratio and a minimum signal-to-noise ratio from the single-frame signal-to-noise ratios corresponding to the audio frames in the call audio;

determining a first difference according to a difference between the maximum signal-to-noise ratio and the minimum signal-to-noise ratio;

determining, for the current frame being processed in the audio frames of the call audio, a second difference according to a difference between the single-frame signal-to-noise ratio corresponding to the current frame and the minimum signal-to-noise ratio; and

determining the instant voice adjustment parameter corresponding to the current frame according to a preset minimum gain value, the first difference, and the second difference.

12. A non-volatile readable storage medium storing computer-readable instructions, wherein the computer-readable instructions, when executed by one or more processors, cause the one or more processors to perform the method according to any one of claims 1 to 11.

**Patentansprüche**

1. Verfahren zur Verarbeitung einer Anrufaudiomischung, das von einem Server ausführbar ist, wobei das Verfahren umfasst:

Erhalten (S202) von Anrufaudios, die von Endgeräten von Anrufteilnehmern, die an einem Anruf teilnehmen, übertragen werden;

Durchführen (S204) einer Sprachanalyse an jedem der Anrufaudios zum Bestimmen der jedem der Endgeräte der Anrufteilnehmer entsprechenden Sprachaktivität, wobei die Sprachaktivität ein Aktivitätsniveau jedes der an dem Anruf teilnehmenden Anrufteilnehmers darstellt;

Bestimmen (S206), entsprechend der Sprachaktivität, von Sprachanpassungsparametern, die den Endgeräten der Anrufteilnehmer entsprechen; und

Einstellen (S208) der entsprechenden Anrufaudios gemäß den Sprachanpassungsparametern, um eingestellte Audios zu erhalten, und Mischen der eingestellten Audios, um eine Audiomischung zu erhalten,

wobei das Durchführen der Sprachanalyse an jedem der Anrufaudios zum Bestimmen der jedem der Endgeräte der Anrufteilnehmer entsprechenden Sprachaktivität umfasst:

Aufteilen jedes der Anrufaudios in mehr als einen Audiorahmen und Berechnen von Einzelrahmen-Signal-Rausch-Verhältnissen, die dem Audiorahmen entsprechen;

wobei das Bestimmen, entsprechend der Sprachaktivität, von Sprachanpassungsparametern, die den Endgeräten der Anrufteilnehmer entsprechen, umfasst:

Bestimmen, für jedes Anrufaudio, von Sprachanpassungsparametern, die den Audiorahmen entsprechen, basierend auf den Einzelrahmen-Signal-Rausch-Verhältnissen, die dem Audiorahmen in dem Anrufaudio entsprechen;
und

wobei das Einstellen der entsprechenden Anrufaudios gemäß den Sprachanpassungsparametern, um eingestellte Audios zu erhalten, umfasst:

Einstellen der Audiorahmen für jedes Anrufaudio gemäß den Sprachanpassungsparametern, die den Audiorahmen in dem Anrufaudio entsprechen, um das eingestellte Audio zu erhalten, das dem Endgerät des Anrufteilnehmers entspricht;

wobei das Bestimmen, für jedes Anrufaudio, von Sprachanpassungsparametern, die den Audiorahmen entsprechen, basierend auf den Einzelrahmen-Signal-Rausch-Verhältnissen, die den Audiorahmen in dem Anrufaudio entsprechen, umfasst:

Berechnen, für einen aktuellen Rahmen, der in den Audiorahmen des Anrufaudios verarbeitet wird, eines momentanen Sprachanpassungsparameters auf der Grundlage des Einzelrahmen-Signal-Rausch-Verhältnisses, das dem aktuellen Rahmen entspricht;

Bestimmen eines historischen Sprachanpassungsparameters, der einem historischen Rahmen vor dem aktuellen Rahmen entspricht;

Bestimmen eines Sprachanpassungsparameters, der dem aktuellen Rahmen entspricht, gemäß dem historischen Sprachanpassungsparameter und dem momentanen Sprachanpassungsparameter, der dem aktuellen Rahmen entspricht; und

Verarbeiten eines nachfolgenden Rahmens nach dem aktuellen Rahmen, bis die den Audiorahmen entsprechenden Sprachanpassungsparameter erhalten werden.

2. Verfahren nach Anspruch 1, wobei das Erhalten von Anrufaudios, die von Endgeräten von Anrufteilnehmern, die an einem Anruf teilnehmen, übertragen werden, umfasst:

Empfangen kodierter Audiodaten, die von den Endgeräten der an dem Anruf teilnehmenden Anrufteilnehmer übertragen werden, wobei die kodierten Audiodaten durch Kodieren erfasster Anrufaudios unter Verwendung eines Kodiermodus, der der Leistung des entsprechenden Endgerätes entspricht, erhalten werden; und

Dekodieren der entsprechenden kodierten Audiodaten, die von den Endgeräten der Anrufteilnehmer übertragen werden, gemäß einem jeweiligen Dekodiermodus, der mit dem Kodiermodus übereinstimmt, um das entsprechende Anrufaudio zu erhalten.

3. Verfahren nach Anspruch 2, ferner umfassend:

Kodieren der Audiomischung unter Verwendung eines Kodiermodus, der der Leistung der Endgeräte der Anrufteilnehmer entspricht, um gemischte kodierte Sprachen zu erhalten, die verschiedenen Kodiermodi entsprechen; und

Übertragen der gemischten kodierten Sprachen gemäß den Kodiermodi, die den gemischten kodierten Sprachen entsprechen, an die jeweiligen Endgeräte der Anrufteilnehmer, die mit den Kodiermodi übereinstimmen und an dem Anruf teilnehmen, wobei die übertragenen gemischten kodierten Sprachen die Endgeräte der Anrufteilnehmer anweisen, die gemischten kodierten Sprachen mit Dekodiermodi zu dekodieren, die den Kodiermodi entsprechen, um die entsprechende Audiomischung zu erhalten.

4. Verfahren nach Anspruch 1, wobei das Durchführen der Sprachanalyse an jedem der Anrufaudios zum Bestimmen der jedem der Endgeräte der Anrufteilnehmer entsprechenden Sprachaktivität, umfasst:

Aufteilen jedes der Anrufaudios in mehr als einen Audiorahmen und Durchführen einer Spracherkennung an jedem der Audiorahmen;
Bestimmen einer Anzahl von Sprachrahmen in den Audiorahmen für jedes Anrufaudio;
Bestimmen eines Anteils der Sprachrahmen für jedes Anrufaudio entsprechend der Menge der Sprachrahmen in dem Anrufaudio und einer Gesamtmenge der Audiorahmen in dem Anrufaudio; und
Bestimmen, entsprechend dem Anteil der Sprachrahmen, der Sprachaktivität, die jedem der Endgeräte der Anrufteilnehmer entspricht;
oder wobei das Durchführen einer Sprachanalyse an jedem der Anrufaudios zum Bestimmen der jedem der Endgeräte der Anrufteilnehmer entsprechenden Sprachaktivität umfasst:

Aufteilen jedes der Anrufaudios in mehr als einen Audiorahmen und Durchführen einer Spracherkennung an jedem der Audiorahmen;
Bestimmen von Sprachrahmen in den Audiorahmen und Bestimmen von Energiewerten, die den Sprachrahmen entsprechen; und
Bestimmen der Sprachaktivität, die jedem der Anrufteilnehmerterminals entspricht, gemäß einer Menge gültiger Sprachrahmen mit Energiewerten, die größer oder gleich einem Energieschwellenwert unter den Sprachrahmen in dem Anrufaudio sind;
oder wobei das Durchführen der Sprachanalyse an jedem der Anrufaudios zum Bestimmen der jedem der Endgeräte der Anrufteilnehmer entsprechenden Sprachaktivität umfasst:

Unterteilen jedes der Anrufaudios in mehr als einen Audiorahmen und Berechnen von Einzelrahmen-Signal-Rausch-Verhältnissen entsprechend den Audiorahmen;
Berechnen einer gewichteten Summe der Einzelrahmen-Signal-Rausch-Verhältnisse, die den Audiorahmen in dem Anrufaudio entsprechen, für jedes Anrufaudio, um ein Sprachsignal-Rausch-Verhältnis zu erhalten, das dem Anrufaudio entspricht; und
Verwenden des Sprachsignal-Rausch-Verhältnisses, das dem Anrufaudio entspricht, als die Sprachaktivität, die dem Endgerät des Anrufteilnehmers entspricht.

5. Verfahren nach Anspruch 1, wobei das Bestimmen von Sprachanpassungsparametern, die den Endgeräten der Anrufteilnehmer entsprechen, entsprechend der Sprachaktivität umfasst:

Bestimmen einer maximalen Sprachaktivität unter der Sprachaktivität, die den Endgeräten der Anrufteilnehmer entspricht; und
Bestimmen der Sprachanpassungsparameter, die den Endgeräten der Anrufteilnehmer entsprechen, gemäß Vergleichswerten zwischen der Sprachaktivität, die den Endgeräten der Anrufteilnehmer entspricht, und der maximalen Sprachaktivität, wobei die Sprachanpassungsparameter, die den Endgeräten der Anrufteilnehmer entsprechen, negativ mit den entsprechenden Vergleichswerten korreliert sind.

6. Verfahren nach Anspruch 1 oder 4, wobei das Aufteilen jedes der Anrufaudios in mehr als einen Audiorahmen und das Berechnen von Einzelrahmen-Signal-Rausch-Verhältnissen, die den Audiorahmen entsprechen, umfasst:

Aufteilen des Anrufaudios in mehr als einen Audiorahmen in einem Zeitdomänenraum für ein Anrufaudio, das jedem Endgerät eines Anrufteilnehmers entspricht;
Konvertieren der Audiorahmen aus dem Zeitdomänenraum in einen Frequenzdomänenraum, um entsprechende Sprachspektren zu erhalten, und Bestimmen von mehr als einem Teilband in jedem der Sprachspektren, die den Audiorahmen entsprechen;
Berechnen von Teilband-Leistungsspektren und Rauschabschätzungswerten entsprechend den Teilbändern für die Teilbänder in dem Audiorahmen und Bestimmen von Teilband-Signal-Rausch-Verhältnissen entsprechend den Teilbändern auf der Grundlage der Teilband-Leistungsspektren und der Rauschabschätzungswerte; und
Berechnen des Einzelrahmen-Signal-Rausch-Verhältnisses, das dem Audiorahmen entspricht, gemäß den Teilband-Signal-Rausch-Verhältnissen, die den Teilbändern in dem Audiorahmen entsprechen.

7. Verfahren nach Anspruch 6, wobei das Berechnen von Teilband-Leistungsspektren und Rauschabschätzungswerten, die den Teilbändern entsprechen, für die Teilbänder in jedem der Audiorahmen umfasst:

Bestimmen, für jedes Teilband in jedem der Audiorahmen, des Teilband-Leistungsspektrums, das dem Teilband entspricht, basierend auf komplexen Frequenzbereichswerten von Frequenzpunkten in dem Teilband;
Durchführen einer Glättungsverarbeitung an den Teilband-Leistungsspektren, um entsprechende glatte Teilband-Leistungsspektren zu erhalten;
Auswählen eines minimalen Wertes von glatten Teilband-Leistungsspektren, die Teilbändern mit einer gleichen Teilbandnummer in verschiedenen Audiorahmen entsprechen, als einen Rausch-Anfangswert, der den Teilbändern mit der gleichen Teilbandnummer entspricht;
Bestimmen, für das Teilband in jedem der Audiorahmen, einer Sprachanwesenheitswahrscheinlichkeit, die dem Teilband entspricht, gemäß dem glatten Teilband-Leistungsspektrum und dem Rausch-Anfangswert, der dem Teilband entspricht; und
Bestimmen, für das Teilband in jedem der Audiorahmen, eines Rauschabschätzungswerten, der dem Teilband entspricht, gemäß der Sprachpräsenzwahrscheinlichkeit und dem Teilband-Leistungsspektrum, das dem Teilband entspricht.

8. Verfahren nach Anspruch 7, wobei das Durchführen einer Glättungsverarbeitung an den Teilband-Leistungsspektren, um entsprechende glatte Teilband-Leistungsspektren zu erhalten, umfasst:

Bestimmen, für ein aktuelles Teilband in einem aktuellen Rahmen, der in den Audiorahmen verarbeitet wird, einer voreingestellten Menge von benachbarten Teilbändern, die an das aktuelle Teilband in dem aktuellen Rahmen angrenzen;
Kombinieren der benachbarten Teilbänder und des aktuellen Teilbandes, um eine Teilbandsequenz zu bilden;
Berechnen einer gewichteten Summe der Leistungsspektren der Teilbänder in der Teilbandsequenz gemäß einer Gewichtung, die der Teilbandsequenz entspricht, um ein glattes Frequenzbereich-Leistungsspektrum zu erhalten, das dem aktuellen Teilband in dem aktuellen Rahmen entspricht; und
Berechnen einer gewichteten Summe eines glatten Frequenzbereich-Leistungsspektrums eines historischen Teilbandes, das eine gleiche Teilbandnummer wie das aktuelle Teilband in einem Rahmen vor dem aktuellen Rahmen hat, und des glatten Frequenzbereich-Leistungsspektrums des aktuellen Teilbandes in dem aktuellen Rahmen, um ein glattes Teilband-Leistungsspektrum zu erhalten, das dem aktuellen Teilband in dem aktuellen Rahmen entspricht.

9. Verfahren nach Anspruch 7, wobei das Bestimmen, für jedes Teilband in jedem der Audiorahmen, einer Sprachpräsenzwahrscheinlichkeit, die dem Teilband entspricht, gemäß dem glatten Teilband-Leistungsspektrum und dem Rausch-Anfangswert, der dem Teilband entspricht, umfasst:

Verwenden, für ein aktuelles Teilband in einem aktuellen Rahmen, der in den Audiorahmen verarbeitet wird, eines Quotienten eines glatten Teilband-Leistungsspektrums und eines Rausch-Anfangswerts des aktuellen Teilbands als ein Leistungsverhältnis, das dem aktuellen Teilband in dem aktuellen Rahmen entspricht;
Verwenden eines ersten Wertes als Sprachpräsenzwert, der dem aktuellen Teilband im aktuellen Rahmen entspricht, in einem Fall, in dem das Leistungsverhältnis größer als ein voreingestellter Schwellenwert ist;
Verwenden eines zweiten Wertes als Sprachpräsenzwert, der dem aktuellen Teilband im aktuellen Rahmen entspricht, in einem Fall, in dem das Leistungsverhältnis kleiner oder gleich dem voreingestellten Schwellenwert ist, wobei der zweite Wert kleiner als der erste Wert ist;
Erhalten einer Sprachpräsenzwahrscheinlichkeit eines historischen Teilbandes, das eine gleiche Teilbandnummer wie das aktuelle Teilband hat, aus einem historischen Rahmen vor dem aktuellen Rahmen; und
Bestimmen einer Sprachpräsenzwahrscheinlichkeit, die dem aktuellen Teilband in dem aktuellen Rahmen entspricht, gemäß der Sprachpräsenzwahrscheinlichkeit, die dem historischen Teilband entspricht, und dem Sprachpräsenzwert, der dem aktuellen Teilband entspricht.

10. Verfahren nach Anspruch 7, wobei das Bestimmen eines dem Teilband entsprechenden Rauschschätzwertes für das Teilband in jedem der Audiorahmen gemäß der Sprachpräsenzwahrscheinlichkeit und des dem Teilband entsprechenden Teilband-Leistungsspektrums umfasst:

Verwenden einer Differenz zwischen dem Wert eins und der Sprachpräsenzwahrscheinlichkeit als eine dem Teilband entsprechende Rauschpräsenzwahrscheinlichkeit;
Erhalten, für ein aktuelles Teilband in einem aktuellen Rahmen, der in den Audiorahmen verarbeitet wird, eines Rauschschätzwertes, der einem historischen Teilband mit einer gleichen Teilbandnummer wie das aktuelle Teilband in einem historischen Rahmen des aktuellen Rahmens entspricht; und

Berechnen einer Summe eines ersten Produkts aus dem Rauschschätzwert, der dem historischen Teilband entspricht, und der Sprachpräsenzwahrscheinlichkeit, die dem aktuellen Teilband im aktuellen Rahmen entspricht, und eines zweiten Produkts aus dem Teilband-Leistungsspektrum und der Rauschpräsenzwahrscheinlichkeit, die dem aktuellen Teilband im aktuellen Rahmen entspricht, um einen Rauschschätzwert zu erhalten, der dem aktuellen Teilband im aktuellen Rahmen entspricht.

**11.** Verfahren nach Anspruch 1, wobei das Berechnen, für einen aktuellen Rahmen, der in den Audiorahmen des Anrufaudios verarbeitet wird, eines momentanen Sprachanpassungsparameters auf der Grundlage des Einzelrahmen-Signal-Rausch-Verhältnisses, das dem aktuellen Rahmen entspricht, umfasst:

Bestimmen eines maximalen Signal-Rausch-Verhältnisses und eines minimalen Signal-Rausch-Verhältnisses aus den Einzelrahmen-Signal-Rausch-Verhältnissen, die den Audiorahmen in dem Anrufaudio entsprechen;
Bestimmen einer ersten Differenz gemäß einer Differenz zwischen dem maximalen Signal-Rausch-Verhältnis und dem minimalen Signal-Rausch-Verhältnis;
Bestimmen einer zweiten Differenz für den aktuellen Rahmen, der in den Audiorahmen des Anrufaudios verarbeitet wird, entsprechend einer Differenz zwischen dem Einzelrahmen-Signal-Rausch-Verhältnis, das dem aktuellen Rahmen entspricht, und dem minimalen Signal-Rausch-Verhältnis; und
Bestimmen des momentanen Sprachanpassungsparameters, der dem aktuellen Rahmen entspricht, gemäß einem voreingestellten minimalen Verstärkungswert, der ersten Differenz und der zweiten Differenz.

**12.** Nichtflüchtiges, lesbares Speichermedium, das computerlesbare Anweisungen speichert, wobei die computerlesbaren Anweisungen, wenn sie von einem oder mehreren Prozessoren ausgeführt werden, den einen oder die mehreren Prozessoren veranlassen, das Verfahren nach einem der Ansprüche 1 bis 11 durchzuführen.

**Revendications**

**1.** Procédé de traitement de mélange d'audios d'appel, exécutable par un serveur, le procédé comprenant :

l'obtention (S202) d'audios d'appel transmis par des terminaux de membres d'appel participant à un appel ;
la réalisation (S204) d'une analyse vocale sur chacun des audios d'appel pour déterminer une activité vocale correspondant à chacun des terminaux de membres d'appel, dans lequel l'activité vocale représente un niveau d'activité de chacun des membres d'appel participant à l'appel ;
la détermination (S206), en fonction de l'activité vocale, de paramètres d'ajustement vocal correspondant aux terminaux de membres d'appel ; et
l'ajustement (S208), en fonction des paramètres d'ajustement vocal, des audios d'appel correspondants pour obtenir des audios ajustés, et le mélange des audios ajustés pour obtenir un audio mélangé,
dans lequel la réalisation d'une analyse vocale sur chacun des audios d'appel pour déterminer une activité vocale correspondant à tous les terminaux de membres d'appel comprend :

la division de chacun des audios d'appel en plusieurs trames audio et le calcul de rapports de signal sur bruit de trame unique correspondant aux trames audio ;
dans lequel la détermination, en fonction de l'activité vocale, de paramètres d'ajustement vocal correspondant aux terminaux de membres d'appel comprend :

la détermination, pour chaque audio d'appel, de paramètres d'ajustement vocal correspondant aux trames audio sur la base des rapports de signal sur bruit de trame unique correspondant aux trames audio dans l'audio d'appel ; et
dans lequel l'ajustement, en fonction des paramètres d'ajustement vocal, des audios d'appel correspondants pour obtenir des audios ajustés comprend :

l'ajustement, pour chaque audio d'appel, des trames audio en fonction des paramètres d'ajustement vocal correspondant aux trames audio dans l'audio d'appel, pour obtenir l'audio ajusté correspondant au terminal de membre d'appel ;
dans lequel la détermination, pour chaque audio d'appel, de paramètres d'ajustement vocal correspondant aux trames audio sur la base des rapports de signal sur bruit de trame unique correspondant aux trames audio dans l'audio d'appel comprend :

le calcul, pour une trame courante en cours de traitement dans les trames audio de l'audio d'appel, d'un paramètre d'ajustement vocal instantané sur la base du rapport de signal sur bruit de trame unique correspondant à la trame courante ;

la détermination d'un paramètre d'ajustement vocal historique correspondant à une trame historique précédant la trame courante ;

la détermination d'un paramètre d'ajustement vocal correspondant à la trame courante en fonction du paramètre d'ajustement vocal historique et du paramètre d'ajustement vocal instantané correspondant à la trame courante ; et

le traitement d'une trame suivante après la trame courante jusqu'à ce que les paramètres d'ajustement vocal correspondant aux trames audio soient obtenus.

**2.** Procédé selon la revendication 1, dans lequel l'obtention d'audios d'appel transmis par des terminaux de membres d'appel participant à un appel comprend :

la réception de données audio codées transmises par les terminaux des membres d'appel participant à l'appel, dans lequel les données audio codées sont obtenues par le codage d'audios d'appel acquis à l'aide d'un mode de codage adapté aux performances du terminal correspondant ; et

le décodage, en fonction d'un mode de décodage respectif adapté au mode de codage, des données audio codées correspondantes transmises par les terminaux de membres d'appel pour obtenir l'audio d'appel correspondant.

**3.** Procédé selon la revendication 2, comprenant en outre :

le codage de l'audio mélangé à l'aide d'un mode de codage adapté aux performances des terminaux de membres d'appel, pour obtenir des voix codées mélangées correspondant à différents modes de codage ; et

la transmission, en fonction des modes de codage correspondant aux voix codées mélangées, des voix codées mélangées aux terminaux de membres d'appel respectifs adaptés aux modes de codage et participant à l'appel, dans lequel les voix codées mélangées transmises instruisent aux terminaux de membres d'appel de décoder les voix codées mélangées avec des modes de décodage correspondant aux modes de codage, pour obtenir l'audio mélangé correspondant.

**4.** Procédé selon la revendication 1, dans lequel la réalisation d'une analyse vocale sur chacun des audios d'appel pour déterminer une activité vocale correspondant à chacun des terminaux de membres d'appel comprend :

la division de chacun des audios d'appel en plusieurs trames audio et la réalisation d'une détection vocale sur chacune des trames audio ;

la détermination d'une quantité de trames vocales dans les trames audio pour chaque audio d'appel ;

la détermination, pour chaque audio d'appel, d'une proportion des trames vocales en fonction de la quantité des trames vocales dans l'audio d'appel et d'une quantité totale des trames audio dans l'audio d'appel ; et

la détermination, en fonction de la proportion des trames vocales, de l'activité vocale correspondant à chacun des terminaux de membres d'appel ;

ou dans lequel la réalisation d'une analyse vocale sur chacun des audios d'appel pour déterminer une activité vocale correspondant à chacun des terminaux de membres d'appel comprend :

la division de chacun des audios d'appel en plusieurs trames audio et la réalisation d'une détection vocale sur chacune des trames audio ;

la détermination de trames vocales dans les trames audio et la détermination de valeurs d'énergie correspondant aux trames vocales ; et

la détermination de l'activité vocale correspondant à chacun des terminaux de membres d'appel en fonction d'une quantité de trames vocales valides avec des valeurs d'énergie supérieures ou égales à un seuil d'énergie parmi les trames vocales dans l'appel audio ;

ou dans lequel la réalisation d'une analyse vocale sur chacun des audios d'appel pour déterminer une activité vocale correspondant à chacun des terminaux de membres d'appel comprend :

la division de chacun des audios d'appel en plusieurs trames audio et le calcul de rapports de signal sur bruit de trame unique correspondant aux trames audio ;

le calcul, pour chaque audio d'appel, d'une somme pondérée des rapports de signal sur bruit de trame unique correspondant aux trames audio dans l'audio d'appel, pour obtenir un rapport de signal sur bruit vocal correspondant à l'audio d'appel ; et

l'utilisation du rapport de signal sur bruit vocal correspondant à l'audio d'appel en tant que l'activité vocale correspondant au terminal de membre d'appel.

**5.** Procédé selon la revendication 1, dans lequel la détermination, en fonction de l'activité vocale, de paramètres d'ajustement vocal correspondant aux terminaux de membres d'appel comprend :

la détermination d'une activité vocale maximale parmi l'activité vocale correspondant aux terminaux de membres d'appel ; et

la détermination des paramètres d'ajustement vocal correspondant aux terminaux de membres d'appel en fonction de valeurs de comparaison entre l'activité vocale correspondant aux terminaux de membres d'appel et l'activité vocale maximale, dans lequel les paramètres d'ajustement vocal correspondant aux terminaux de membres d'appel sont corrélés négativement avec les valeurs de comparaison correspondantes.

**6.** Procédé selon la revendication 1 ou 4, dans lequel la division de chacun des audios d'appel en plusieurs trames audio et le calcul de rapports de signal sur bruit de trame unique correspondant aux trames audio comprend :

la division, pour un audio d'appel correspondant à chaque terminal de membre d'appel, de l'audio d'appel en plusieurs trames audio dans un espace de domaine temporel ;

la conversion des trames audio de l'espace de domaine temporel dans un espace de domaine fréquentiel pour obtenir des spectres vocaux correspondants, et la détermination de plusieurs sous-bandes dans chacun des spectres vocaux correspondant aux trames audio ;

le calcul, pour les sous-bandes dans la trame audio, de spectres de puissance de sous-bande et de valeurs d'estimation de bruit correspondant aux sous-bandes, et la détermination, sur la base des spectres de puissance de sous-bande et des valeurs d'estimation de bruit, de rapports de signal sur bruit de sous-bandes correspondant aux sous-bandes ; et

le calcul du rapport de signal sur bruit de trame unique correspondant à la trame audio en fonction des rapports de signal sur bruit de sous-bandes correspondant aux sous-bandes dans la trame audio.

**7.** Procédé selon la revendication 6, dans lequel le calcul, pour les sous-bandes dans chacune des trames audio, de spectres de puissance de sous-bande et de valeurs d'estimation de bruit correspondant aux sous-bandes comprend :

la détermination, pour chaque sous-bande dans chacune des trames audio, du spectre de puissance de sous-bande correspondant à la sous-bande sur la base de valeurs complexes de domaine fréquentiel de points fréquentiels dans la sous-bande ;

la réalisation d'un traitement de lissage sur les spectres de puissance de sous-bande pour obtenir des spectres de puissance de sous-bande lissés ;

la sélection d'une valeur minimale des spectres de puissance de sous-bande lissés correspondant à des sous-bandes avec un même numéro de sous-bande dans différentes trames audio, en tant qu'une valeur initiale de bruit correspondant aux sous-bandes avec le même numéro de sous-bande ;

la détermination, pour la sous-bande dans chacune des trames audio, d'une probabilité de présence de voix correspondant à la sous-bande en fonction du spectre de puissance de sous-bande lissé et de la valeur initiale de bruit correspondant à la sous-bande ; et

la détermination, pour la sous-bande dans chacune des trames audio, d'une valeur d'estimation de bruit correspondant à la sous-bande en fonction de la probabilité de présence de voix et du spectre de puissance de sous-bande correspondant à la sous-bande.

**8.** Procédé selon la revendication 7, dans lequel la réalisation d'un traitement de lissage sur les spectres de puissance de sous-bande pour obtenir des spectres de puissance de sous-bande lissés correspondants comprend :

la détermination, pour une sous-bande courante dans une trame courante en cours de traitement dans les trames audio, d'une quantité prédéfinie de sous-bandes adjacentes qui sont adjacentes à la sous-bande courante dans la trame courante ;

la combinaison des sous-bandes adjacentes et de la sous-bande courante pour former une séquence de sous-bandes ;

le calcul d'une somme pondérée des spectres de puissance des sous-bandes dans la séquence de sous-bandes en fonction d'un poids correspondant à la séquence de sous-bandes, pour obtenir un spectre de puissance lissé de domaine fréquentiel correspondant à la sous-bande courante dans la trame courante ; et le calcul d'une somme pondérée d'un spectre de puissance lissé de domaine fréquentiel d'une sous-bande historique ayant un même numéro de sous-bande que la sous-bande courante dans une trame précédant la trame courante et du spectre de puissance lissé de domaine fréquentiel de la sous-bande courante dans la trame courante, pour obtenir un spectre de puissance de sous-bande lissé correspondant à la sous-bande courante dans la trame courante.

9. Procédé selon la revendication 7, dans lequel la détermination, pour chaque sous-bande dans chacune des trames audio, d'une probabilité de présence de voix correspondant à la sous-bande en fonction du spectre de puissance de sous-bande lissé et de la valeur initiale de bruit correspondant à la sous-bande comprend :

l'utilisation, pour une sous-bande dans une trame courante en cours de traitement dans les trames audio, d'un quotient d'un spectre de puissance de sous-bande lissé et d'une valeur initiale de bruit de la sous-bande courante en tant qu'un rapport de puissance correspondant à la sous-bande courante dans la trame courante ; l'utilisation d'une première valeur en tant qu'une valeur de présence de voix correspondant à la sous-bande courante dans la trame courante dans un cas où le rapport de puissance est supérieur à un seuil prédéfini ; l'utilisation d'une deuxième valeur en tant que la valeur de présence de voix correspondant à la sous-bande courante dans la trame courante dans un cas où le rapport de puissance est inférieur ou égal au seuil prédéfini, dans lequel la deuxième valeur est inférieure à la première valeur ; l'obtention, à partir d'une trame historique précédant la trame courante, d'une probabilité de présence de voix d'une sous-bande historique ayant un même numéro de sous-bande que la sous-bande courante ; et la détermination d'une probabilité de présence de voix correspondant à la sous-bande courante dans la trame courante en fonction de la probabilité de présence de voix correspondant à la sous-bande historique et de la valeur de présence de voix correspondant à la sous-bande courante.

10. Procédé selon la revendication 7, dans lequel la détermination, pour la sous-bande dans chacune des trames audio, d'une valeur d'estimation de bruit correspondant à la sous-bande en fonction de la probabilité de présence de voix et du spectre de puissance de sous-bande correspondant à la sous-bande comprend :

l'utilisation d'une différence entre valeur une et la probabilité de présence de voix en tant qu'une probabilité de présence de bruit correspondant à la sous-bande ; l'obtention, pour une sous-bande courante dans une trame courante en cours de traitement dans les trames audio, d'une valeur d'estimation de bruit correspondant à une sous-bande historique avec un même numéro de sous-bande que la sous-bande courante dans une trame historique de la trame courante ; et le calcul d'une somme d'un premier produit de la valeur d'estimation de bruit correspondant à la sous-bande historique et de la probabilité de présence de voix correspondant à la sous-bande courante dans la trame courante et d'un deuxième produit du spectre de puissance de sous-bande et de la probabilité de présence de bruit correspondant à la sous-bande courante dans la trame courante, pour obtenir une valeur d'estimation de bruit correspondant à la sous-bande courante dans la trame courante.

11. Procédé selon la revendication 1, dans lequel le calcul, pour une trame courante en cours de traitement dans les trames audio de l'audio d'appel, d'un paramètre d'ajustement vocal instantané sur la base du rapport de signal sur bruit de trame unique correspondant à la trame courante comprend :

la détermination d'un rapport de signal sur bruit maximal et d'un rapport de signal sur bruit minimal parmi les rapports de signal sur bruit de trame unique correspondant aux trames audio dans l'audio d'appel ; la détermination d'une première différence en fonction d'une différence entre le rapport de signal sur bruit maximal et le rapport de signal sur bruit minimal ; la détermination, pour la trame courante en cours de traitement dans les trames audio de l'audio d'appel, d'une deuxième différence en fonction d'une différence entre le rapport de signal sur bruit de trame unique correspondant à la trame courante et le rapport de signal sur bruit minimal ; et la détermination du paramètre d'ajustement vocal instantané correspondant à la trame courante en fonction d'une valeur de gain minimale prédéfinie, de la première différence et de la deuxième différence.

12. Support de stockage lisible non volatil stockant des instructions lisibles par ordinateur, dans lequel les instructions lisibles par ordinateur, lorsqu'elles sont exécutées par un ou plusieurs processeurs, amènent les un ou plusieurs processeurs à réaliser le procédé selon l'une quelconque des revendications 1 à 11.

**FIG. 1**

S202

Obtain call audios corresponding to terminals of call members participating in a call

S204

Perform voice analysis on each of the call audios to determine voice activity corresponding to each of the call member terminals, the voice activity representing activity levels of the call members participating in the call

S206

Determine, according to the voice activity, voice adjustment parameters corresponding to the call member terminals

S208

Adjust the call audios according to the voice adjustment parameters corresponding to the call member terminals to obtain adjusted audios, and mixing the adjusted audios to obtain a mixed audio

**FIG. 2**

S302

Receive encoded audio data transmitted by terminals of cell members participating in a call, the encoded audio data being obtained by encoding acquired call audios by using encoding modes matching performances of the corresponding terminals

S304

Decode, according to decoding modes matching the encoding modes, the encoded audio data transmitted by the call member terminals to obtain corresponding call audios

S306

Perform voice analysis on each of the call audios to determine voice activity corresponding to each of the call member terminals

S308

Determine, according to the voice activity, voice adjustment parameters corresponding to the call member terminals

S310

Adjust the call audios according to the voice adjustment parameter corresponding to the call member terminals to obtain adjusted audios, and mixing the adjusted audios to obtain a mixed audio

S312

Encode the mixed audio by using encoding modes matching the performance of the call member terminals, to obtain mixed encoded voices corresponding to the different encoding modes

S314

Transmit, according to the encoding modes corresponding to the mixed encoded voices, the mixed encoded voices to the respective call member terminals matching the encoding modes and participating in the call, the transmitted mixed encoded voice instructing the call member terminal to decode the mixed encoded voices with decoding modes matching the encoding modes, to obtain the corresponding mixed audio

**FIG. 3**

S402

Divide each of the call audios into more than one audio frames and perform voice detection on each of the audio frames

S404

Determine, for each call audio, a quantity of voice frames in the audio frames

S406

Determine, for each call audio, a proportion of the voice frames according to the quantity of the voice frames in the call audio and a total quantity of the audio frames in the call audio

S408

Determine voice activity corresponding to each of the call member terminals according to the proportion of the voice frames

**FIG. 4**

S502

Divide each of the call audios into more than one audio frames and calculate single-frame signal-to-noise ratios corresponding to the audio frames

S504

Calculate, for each call audio, a weighted sum of the single-frame signal-to-noise ratios corresponding to the audio frames in the call audio, to obtain a voice signal-to-noise ratio corresponding to the call audio

S506

Use the voice signal-to-noise ratios corresponding to the call audios as the voice activity corresponding to the call member terminals

**FIG. 5**

```
                                                              ⟋ S602
┌─────────────────────────────────────────────────────────────────────┐
│  Determine, for each subband in each of audio frames, a subband power │
│  spectrum corresponding to the subband based on frequency domain      │
│  complex values of frequency points in the subband                    │
└─────────────────────────────────────────────────────────────────────┘
                                  │
                                  ▼                            ⟋ S604
┌─────────────────────────────────────────────────────────────────────┐
│  Perform smoothing processing on the subband power spectra to obtain  │
│  corresponding subband smooth power spectra                           │
└─────────────────────────────────────────────────────────────────────┘
                                  │
                                  ▼                            ⟋ S606
┌─────────────────────────────────────────────────────────────────────┐
│  Select a minimum value from subband smooth power spectrum            │
│  corresponding to subbands having a same subband number in different  │
│  audio frames, as a noise initial value corresponding to the subbands │
│  with the same subband number                                         │
└─────────────────────────────────────────────────────────────────────┘
                                  │
                                  ▼                            ⟋ S608
┌─────────────────────────────────────────────────────────────────────┐
│  Determine, for the subband in each of the audio frames, a voice      │
│  presence probability corresponding to the subband according to the   │
│  subband smooth power spectrum and the noise initial value            │
│  corresponding to the subband                                         │
└─────────────────────────────────────────────────────────────────────┘
                                  │
                                  ▼                            ⟋ S610
┌─────────────────────────────────────────────────────────────────────┐
│  Determine, for the subband in each of the audio frames, a noise      │
│  estimation value corresponding to the subband according to the voice │
│  presence probability and the subband power spectrum corresponding to │
│  the subband                                                          │
└─────────────────────────────────────────────────────────────────────┘
```

**FIG. 6**

S702

Obtain a call creation instruction

S704

Participate in a call created in response to the call creation instruction

S706

Acquire a call audio generated locally during the call

S708

Transmit the call audio to a server, the transmitted call audio instructing the server to: perform voice analysis on call audios of terminals of call members participating in the call, determine voice activity, determine corresponding voice adjustment parameters according to the voice activity, adjust the corresponding call audios according to the voice adjustment parameters corresponding to the call member terminals to obtain adjusted audios, and mixing the adjusted audios to obtain a mixed audio, the voice activity representing activity levels of the call members participating in the call

S710

Receive and play mixed audio fed back by the server

**FIG. 7**

**FIG. 8**

Call audio mixing processing apparatus900

901
Obtaining module

902
Voice analysis module

903
Determining module

904
Mixing processing module

**FIG. 9(a)**

Call audio mixing processing apparatus900

| | |
|---|---|
| 901 | 904 |
| Obtaining module | Mixing processing module |
| 902 | 905 |
| Voice analysis module | Feedback module |
| 903 | |
| Determining module | |

**FIG. 9(b)**

Call audio mixing processing apparatus1000

| | |
|---|---|
| 1001 | 1004 |
| Obtaining module | Transmitting module |
| 1002 | 1005 |
| Call participating module | Receiving module |
| 1003 | |
| Acquiring module | |

**FIG. 10**

Processor

Operating system

Computer program

Non-volatile storage medium

Computer program

Internal memory

Memory

Network interface

Server

**FIG. 11**

**FIG. 12**

**REFERENCES CITED IN THE DESCRIPTION**

**Patent documents cited in the description**

- CN 202010168875
- US 2018041639 A1